(19) Europäisches Patentamt
European Patent Office
Office européen des brevets

(11) EP 1 791 086 B1

(12) **EUROPEAN PATENT SPECIFICATION**

(45) Date of publication and mention of the grant of the patent:
**19.10.2011 Bulletin 2011/42**

(51) Int Cl.:
***G06T 5/00*** *(2006.01)*

(21) Application number: **06255934.9**

(22) Date of filing: **21.11.2006**

(54) **Multi-resolution adaptive filtering**

Adaptive Mehrfachauflösungsfilterung

Filtrage adaptatif de multi-résolution

(84) Designated Contracting States:
**DE GB**

(30) Priority: **23.11.2005 US 739871 P**
**16.11.2006 US 600464 P**

(43) Date of publication of application:
**30.05.2007 Bulletin 2007/22**

(73) Proprietor: **Sonosite, Inc.**
**Bothell, WA 98021-3904 (US)**

(72) Inventors:
- **Hwang, Juinjet**
  **Mercer Island, WA 98040 (US)**
- **Pailoor, Ramachandra**
  **Woodinville, WA 98072 (US)**

(74) Representative: **McLeish, Nicholas Alistair Maxwell et al**
**Boult Wade Tennant**
**Verulam Gardens**
**70 Gray's Inn Road**
**London WC1X 8BT (GB)**

(56) References cited:
**WO-A2-2005/029409** **GB-A- 2 388 991**
**US-A- 5 526 446** **US-B1- 6 801 672**

- **KUNZ D ET AL: "Nonlinear multiresolution gradient adaptive filter for medical images" PROCEEDINGS OF THE SPIE - THE INTERNATIONAL SOCIETY FOR OPTICAL ENGINEERING SPIE-INT. SOC. OPT. ENG USA, vol. 5032, 2003, pages 732-742, XP002421756 ISSN: 0277-786X**
- **FABRIZIO ARGENTI ET AL: "Speckle Removal From SAR Images in the Undecimated Wavelet Domain" IEEE TRANSACTIONS ON GEOSCIENCE AND REMOTE SENSING, IEEE SERVICE CENTER, PISCATAWAY, NJ, US, vol. 40, no. 11, November 2002 (2002-11), pages 2363-2373, XP011073257 ISSN: 0196-2892**
- **VAN ROOSMALEN P M B ET AL: "Noise reduction for image sequences using an oriented pyramid thresholding technique" PROCEEDINGS OF THE INTERNATIONAL CONFERENCE ON IMAGE PROCESSING (ICIP) LAUSANNE, SEPT. 16 - 19, 1996, NEW YORK, IEEE, US, vol. VOL. 1, 16 September 1996 (1996-09-16), pages 375-378, XP010202225 ISBN: 0-7803-3259-8**
- **BRUNO AIAZZI ET AL: "Multiresolution Local-Statistics Speckle Filtering Based on a Ratio Laplacian Pyramid", IEEE TRANSACTIONS ON GEOSCIENCE AND REMOTE SENSING, IEEE SERVICE CENTER, PISCATAWAY, NJ, US, vol. 36, no. 5, 1 September 1998 (1998-09-01), XP011021075, ISSN: 0196-2892**
- **ZLOKOLICA V ET AL: "Video denoising using multiple class averaging with Multiresolution", PARALLEL AND DISTRIBUTED PROCESSING AND APPLICATIONS: SECOND INTERNATIONAL SYMPOSIUM, ISPA 2004 PROCEEDINGS, HONG KONG, CHINA, DECEMBER 13 - 15, 2004 (IN: LECTURE NOTES IN COMPUTER SCIENCES), SPRINGER, DE, 18 September 2003 (2003-09-18), page 172179, XP002332716, ISBN: 978-3-540-24128-7**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- **CARMONA R A ET AL: "ADAPTIVE SMOOTHING RESPECTING FEATURE DIRECTIONS", IEEE TRANSACTIONS ON IMAGE PROCESSING, IEEE SERVICE CENTER, PISCATAWAY, NJ, US, vol. 7, no. 3, 1 March 1998 (1998-03-01), pages 353-358, XP000738212, ISSN: 1057-7149, DOI: DOI: 10.1109/83.661185**
- **LAW T ET AL: "IMAGE FILTERING, EDGE DETECTION, AND EDGE TRACING USING FUZZY REASONING", IEEE TRANSACTIONS ON PATTERN ANALYSIS AND MACHINE INTELLIGENCE, IEEE SERVICE CENTER, LOS ALAMITOS, CA, US, vol. 18, no. 5, 1 May 1996 (1996-05-01), pages 481-491, XP000592440, ISSN: 0162-8828, DOI: DOI:10.1109/34.494638**

## Description

TECHNICAL FIELD

This invention relates in general to image processing and, more particularly, to image processing to reduce image noise.

## BACKGROUND OF THE INVENTION

Speckle noise comprises coherent noise generated, for example, in an ultrasound image. For example, when forming ultrasound images, a beam forming process, which is a coherent process, is typically performed to form ultrasound beams from which an ultrasound image is derived. Many beam forming processes result in a kind of "salt and pepper noise" that is superimposed on the true image information. This noise is referred to as "speckle noise." A similar phenomenon occurs in radar.

Many in the ultrasound industry have tried to filter out speckle noise based on a compounding technique. That is, many have attempted to remediate speckle noise by processing the image in different frequency bands and integrating the different frequency bands together to reduce the speckle noise.

Another way to reduce speckle noise which has been attempted is the use of spatial compounding. In spatial compounding, two or more images are generated from different "look directions," or different angles of view, and the images are integrated together to average the speckle noise out.

Both of the foregoing speckle noise reduction techniques often achieve some level of speckle noise suppression. However, these techniques are not without disadvantage. For example, in frequency compounding there will be some axial resolution compromise because the frequency band is partitioned into multiple smaller and narrower bandwidth signals. This narrow banding results in an axial resolution compromise. The use of spatial compounding, accomplished by acquisition of multiple views from different look directions, slows the frame rate of the final image acquisition. Accordingly, real-time images may have poor quality movement or animation.

"Speckle Removal From SAR Images in the Undecimated Wavelet Domain", IEEE Transactions on Geoscience and Remote Sensing, vol. 40, no. 11, November 2002 discloses speckle reduction that uses minimum mean-square error filtering performed in the undecimated wavelet domain by means of an adaptive rescaling of the detail coefficients, whose amplitude is divided by the variance ratio of the noisy coefficient to the noise-free one.

"A nonlinear multi-resolution gradient adaptive filter for medical images", Proceedings of SPIE, vol. 5032 (2003) discloses noise reduction achieved by non-linear adaptive filtering of individual band pass layers of a multi-resolution pyramid.

## BRIEF SUMMARY OF THE INVENTION

According to an aspect of the invention, there is provided a method according to claim 1. According to another aspect of the invention there is provided a system according to claim 36.

An embodiment of the present invention is directed to systems and methods which remediate speckle noise by analyzing an image and extracting local features of the image and applying adaptive filters to such features. Based on various ones of the features identified within an image, embodiments determine filter configurations for applying filtering at different orientations and/or with different filter parameters to improve image quality by effectively suppressing speckle noise. The filters applied are preferably adaptive, e.g., spatially and/or temporally, with respect to the particular feature for which the filter is being applied.

Embodiments of the invention perform processing, using the aforementioned adaptive filters, on sub-images at various levels of resolution. For example, a high resolution image may be decomposed into a plurality of image representations, each having a lower resolution than a next image representation. Embodiments operate to identify local features within each such image representation and apply filters thereto, wherein the filters applied are selected with orientations and/or parameters for a corresponding feature as present in the particular image representation. Information with respect to features within the image representations of an image may be shared between processes applying filtering to different ones of the image representations. After filtering has been applied to each image representation, preferred embodiments reconstruct a filtered image from the filtered image representations. The foregoing may image decomposition, decomposed image representation filtering, and filtered image representation reconstruction may be performed multiple times (e.g., iteratively or upon altering or application of a change to the image) with respect to a same image.

Various knowledge bases may be utilized in applying adaptive filters of embodiments of the invention. For example, a knowledge base associating various filter parameters with feature aspects (e.g., step function, ridge lines, surface sloping, textures, pixel intensity gradients, etcetera) may be utilized in selecting adaptive filters and/or adaptive filter parameters for use with respect to particular features identified in an image. Additionally or alternatively, a knowledge base associating various filter parameters with features typically present in particular image types (e.g., particular anatomic structures, particular procedures, etcetera) may be utilized in selecting adaptive filters and/or adaptive filter parameters for use with respect to particular features identified in an image.

The foregoing has outlined rather broadly the features and technical advantages of the present invention in order that the detailed description of the invention that follows may be better understood. Additional features and advantages of the invention will be described hereinafter which form the subject of the claims of the invention. It should be appreciated by those skilled in the art that the conception and specific embodiment disclosed may be readily utilized as a basis for modifying or designing other structures for carrying out the same purposes of the present invention. It should also be realized by those skilled in the art that such equivalent constructions do not depart from the scope of the invention as set forth in the appended claims. The novel features which are believed to be characteristic of the invention, both as to its organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present invention.

## BRIEF DESCRIPTION OF THE DRAWING

For a more complete understanding of the present invention, reference is now made to the following descriptions taken in conjunction with the accompanying drawing, in which:

FIGURE 1 illustrates application of adaptive and/or steerable filters to an image according to embodiments of the invention;

FIGURE 2A illustrates two-dimensional signal processing using intra-frame processing according to an embodiment of the invention;

FIGURE 2B illustrates two-dimensional signal processing using inter-frame processing according to an embodiment of the invention;

FIGURE 3 illustrates three-dimensional signal processing according to an embodiment of the invention;

FIGURE 4A illustrates a noisy step function signal as may be filtered according to an embodiment of the invention;

FIGURE 4B illustrates application of adaptive filtering to the noisy step function signal of FIGURE 4A according to an embodiment of the invention;

FIGURE 5 illustrates application of a conventional non-adaptive filter to the noisy step function signal of FIGURE 4A;

FIGURE 6 illustrates how an adaptive filter of an embodiment of the present invention may operate in one-dimensional space;

FIGURES 7A and. 7B illustrate a two-dimensional case wherein adaptive filtering is applied similarly to the one-dimensional case of FIGURE 6;

FIGURES 8A and 8B illustrate an exemplary symmetrical adaptive filter applied at a ridge feature according to an embodiment of the invention;

FIGURES 9A and 9B illustrate an exemplary symmetrical adaptive filter applied at a crossing of features according to an embodiment of the invention;

FIGURES 10A and 10B illustrate various example steerable filters for use in at least one embodiment of the invention;

FIGURE 11 shows a graphical representation of a filter of an embodiment of the invention;

FIGURE 12 illustrates edge direction and gradient direction within an image according to various embodiments of the invention;

FIGURES 13A-13C illustrate simple example implementations for a Gaussian filter kernel as may be utilized according to embodiments of the invention;

FIGURE 14 shows an exemplary signal path of a diagnostic ultrasound system adapted for use with various embodiments of the invention;

FIGURE 15 shows a functional block diagram of a processing unit as may be used in image filtering according to various embodiments of the invention;

FIGURE 16 shows detail with respect to an embodiment of the decomposing block of FIGURE 15;

FIGURE 17 shows detail with respect to an embodiment of processing blocks of FIGURE 15;

FIGURE 18 shows detail with respect to an embodiment of the reconstruction block of FIGURE 15; and

FIGURE 19 illustrates an exemplary digital signal processor hardware configuration adapted according to an embodiment of the invention.

DETAILED DESCRIPTION OF THE INVENTION

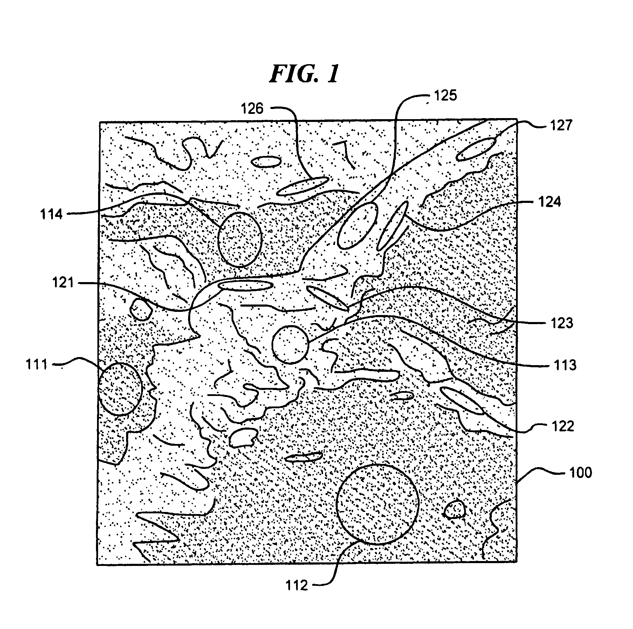

Directing attention to FIGURE 1, a representation of application of adaptive filters to image 100 according to an embodiment of the invention is shown. Specifically, FIGURE 1 includes circles 111-114 and ellipses 121-127 that represent exemplary filters according to embodiments of the present invention. The circles and ellipses are overlaid on top of image 100, such as with respect to various corresponding features (e.g., structures, textures, gradients, slopes, functions, etcetera) present in the image. In operation according to preferred embodiments of the invention, the foregoing filters, being of different sizes, applied at different orientations with respect to the image, and/or employing various parameters, are developed and applied to images in order to smooth out and/or filter out speckle noise. Such filters are preferably adapted to the local features in order to provide a best quality of filtering performance. For example, a filtering processor of embodiments uses the foregoing filters to average out pixels at different locations by averaging similar pixels while avoiding averaging dissimilar pixels. Accordingly, the system preferably adaptively determines whether or not it is desirable to include a certain pixel in a filtering process. One or more knowledge bases may be utilized in selection filters and/or filter parameters for use with respect to the particular features of an image, such as image 100.

Embodiments of the invention implement sub-image processing with respect to providing image filtering. For example, a multi-resolution sub-image processing step of embodiments decomposes an image into different resolution sub-images or image representations, wherein one or more adaptive filters are applied to various features as present in each such sub-image to suppress the speckle noise. The filters used with respect to any such sub-image may be of different sizes, applied at different orientations with respect to the image, and/or employ various parameters as discussed above. That is, embodiments of the invention implement multiple filters that include a behavior that depends on the features locally in a respective one of the sub-images. In operation according to preferred embodiments, once the sub-images are processed using the foregoing adaptive filters, the processed sub-images are combined to reconstruct the image that is then presented to the end user or otherwise used or stored as a filtered image.

Example characteristics for adaptive filters according to various embodiments may include filtering and smoothing flat surfaces, filtering ramped surfaces, preserving sharp edges between surfaces, filtering noise at a ridge feature, preserving sharp corners, etcetera. For example, a filter as may be implemented with respect to a particular feature having a flat surface may average pixels on the same surface, that is pixels with similar characteristics. However, if the surface is not a flat surface, but rather is a curved surface having some slope associated therewith, then embodiments may implement a filter which groups and filters the pixels along the same slope without disturbing that slope. If there is a sharp edge between surfaces, such as a top surface and a side surface (e.g., a view of a cube where several surfaces are visible), a filter implemented according to embodiments preferably operates to preserve the sharpness of the edges, thereby minimizing corruption and distortion of the edges. Where the image feature or structure comprises a ridge (e.g., a line like structure), a filter implemented according to embodiments of the invention preserves the shape of the ridge and also preserves the sharpness of the ridge. If there is an intersection of lines (e.g., two ridges intersect) resulting in a corner at the intersection, filters implemented according to embodiments of the invention preserve the corner to be very sharp. In operation of preferred embodiments of the invention, a filter or filters are developed using the foregoing characteristics in association with identified features in the image, thereby facilitating high image quality in the speckle reduction process.

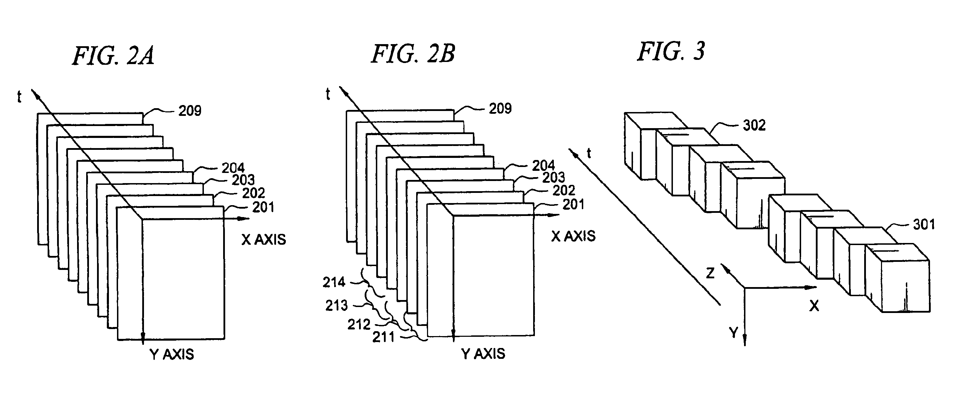

Directing attention to FIGURES 2A, 2B, and 3, it can be seen that various embodiments of the invention can be applied in multiple dimensions. For example, algorithms implementing the concepts of the present invention may be up applied to one-dimensional signal processing, two-dimensional image processing, three-dimensional image processing, and four-dimensional image processing. Four-dimensional signal processing according to embodiments means three-dimensional space and time (e.g., X, Y, Z and time). Three-dimensional signal processing according to embodiments can be two-dimensional space and time (e.g., X, Y and time) or three-dimensional space (e.g., X, Y, and Z).

An example of two-dimensional signal processing is shown with respect to the image sequence of FIGURE 2A, wherein the *t* axis is time the X and Y axes are the space dimensions of a two-dimensional image. In the example illustrated in FIGURE 2A, image processing to provide the foregoing filtering is provided independently for each frame in a temporal sequence (i.e., intra-frame processing), shown here as frames 201-209. That is, the processing is done on a frame by frame basis without using inter-frame information (e.g., information acquired from the next frame) available from the temporal sequence of frames. Various embodiments of the invention can use either or both inter-frame (in this example, spatial information) and intra-frame (in this example, temporal information) filter features.

An example of three-dimensional signal processing is shown in FIGURE 2B. Specifically, the example shown in FIGURE 2B illustrates the use of inter-frame information, In the illustrated inter-frame signal processing, successive frames, such as frames of groups 211-214, are included in the processing to improve the filter performance. For example, a filter applied with respect to a feature present in successive frames of group 211 of FIGURE 2B may be oriented along the *t* axis in order to take advantage of information available in successive frames. Such frame groups may be defined by a series of frames in which a feature is correlated, by an arbitrary number of frames, by a moving window, etcetera. Embodiments of the invention may implement frame groups which include different frames for providing filtering with respect to various image features (e.g., group 211 for a first feature and group 212 for a second feature). However the foregoing frame groups are selected, using such inter-frame information with respect to various features may be utilized to provide improved image processing where relevant information is provided inter-frame.

It should be appreciated that the foregoing concepts can be applied with respect to different degrees of spatial information, and thus are not limited to use with respect to two-dimensional spatial image processing. The example of FIGURE 3 illustrates application of the foregoing concepts with respect to a three-dimensional object sequence. For example, where the image comprises a three-dimensional block of data, but this block of data is being acquired at a different time, a block image sequence (shown here as blocks 301 and 302) may be acquired and the foregoing concepts applied to improve the image quality.

The following equations provide filter formulations describing two categories of filters according to various embodiments.

$$G_s(r(x,y,z,t), g(x,y,z,t), \nabla g(x,y,z,t), f(x,y,z,t), \ldots) = e^{-\left(\frac{r^2}{\sigma_r(g,.)^2}\right)} e^{-\left(\frac{|\nabla_g|^2}{\sigma_g(g..)^2}\right)} e^{-\left(\frac{|\nabla f|^2}{\sigma_f(g,.)^2}\right)} \ldots \quad (1)$$

$$G_a(u,v,w,t,g(x,y,z,t), \nabla g(x,y,z,t), f(x,y,z,t), \ldots) = e^{-\left(\frac{u^2}{\sigma_u(g,.)^2} + \frac{v^2}{\sigma_v(g,.)^2} + \ldots\right)} e^{-\left(\frac{|\nabla g_u|^2 + |\nabla g_v|^2}{\sigma^2_g(g,.)} + \ldots\right)} e^{-\left(\frac{|\nabla f|^2}{\sigma^2_f(g,.)} + \ldots\right)} \ldots \quad (2)$$

The first category of filters shown above (equation (1)) comprises a symmetrical filter. The second category of filters shown above (equation (2)) comprises an asymmetrical filter, wherein *u* is the dominant orientation of the feature. Both symmetrical and asymmetrical filters may be adaptive. The exemplary filter formulations are functions of multiple different parameters. Here *r, x, y,* and *z* comprise spatial information, *t* comprises temporal information, *g* comprises grayscale information (e.g., differential grayscale information), and *f* is a generic term (e.g., other relevant information).

It should be appreciated that the coordinate system in which speckle reduction operations take place according to embodiments of the invention may be the polar coordinate system (e.g., using radial coordinates, such as radius or distance *r*) or Cartesian coordinate system (e.g., using coordinates along X, Y and Z axes). Ultrasound information is basically data acquired from different look directions, so that the data can be assembled into an image according to polar coordinates. However, most of the display modes are Cartesian, as linear arrays are usually rectangular. Scan heads usually use polar coordinates, and the display usually uses rectangular coordinates, so there is often a reconstruction process from the polar coordinate system used with respect to image data acquired by an ultrasound system scan head and the rectangular coordinate system used with respect to image data displayed by an ultrasound system display. That is, most ultrasound systems convert from polar coordinates into rectangular coordinates (referred to as the scan conversion process). The filtering described herein can be applied in the polar coordinate space and/or in the rectangular coordinate space.

What is describe on the right hand side of equation (1) is that a cascade (e.g., multiple different Gaussian filters) is being used. Gaussian filters are cascaded into a single filter called $G_S$. The illustrated filter equation is symmetrical with respect to *r*, distance, and thus is symmetrical and uniform in all dimensions. Delta *g* ($\Delta g$) in an embodiment of equation (1) comprises gradient information, such as a gradient with respect to the grayscale in different dimensions. The *f* function is provided in the exemplary embodiment to, for example, accommodate a generic function. It should be appreciated that more than one such *f* function may be used according to embodiments of the invention, such as where a plurality of different additional relevant information is present.

Equation (2) provides an asymmetrical filter, such that the equation is not uniform in all dimensions. That is, the filter applies filtering differently with respect to a selected orientation, such as along a feature axis as compared to an axis orthogonal to the feature axis. The use of such asymmetric filters according to embodiments of the invention may be particularly useful in preserving aspects of a feature in the filtered image. As with equation (1) above, equation (2) shown above uses a cascade (e.g., multiple different Gaussian filters). It should be appreciated that the exemplary asymmetrical filter can be decomposed into different orientations. A filter orientation may be determined by analyzing the local features in order to extract one or more feature orientations. The filter may preferably then be applied along a dominant orientation of the feature.

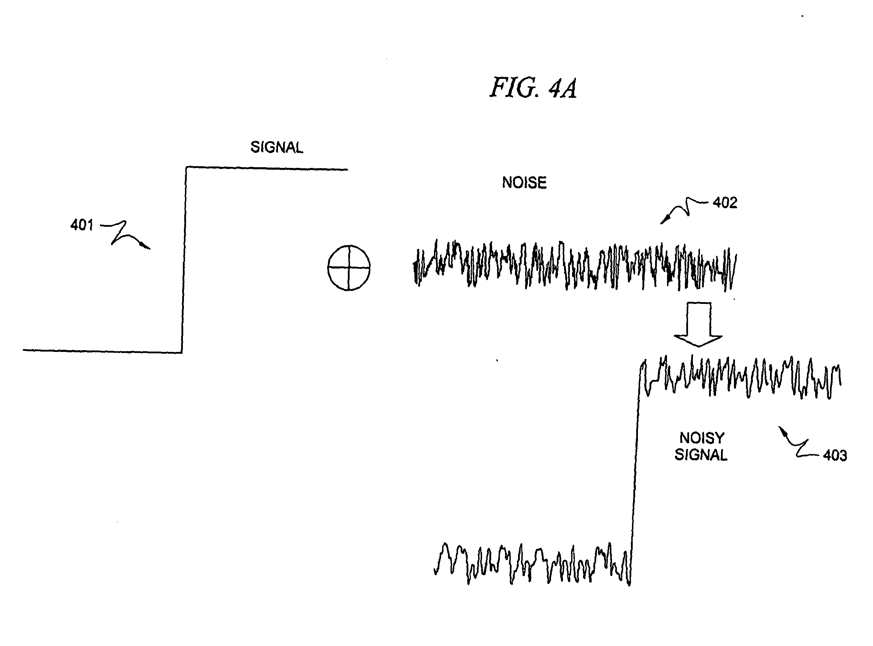

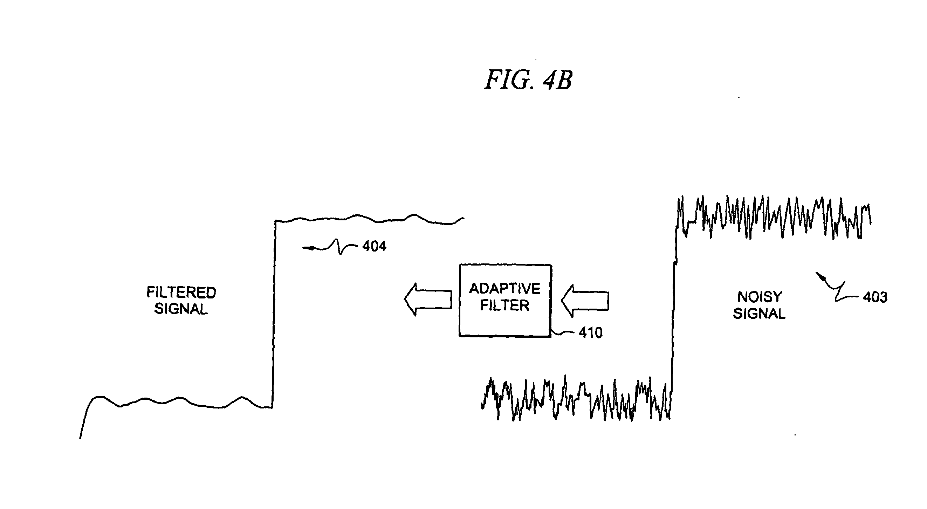

Directing attention to FIGURES 4A and 4B, an illustrative example of application of adaptive filtering according to an embodiment of the invention is shown. In order to simplify the concepts described, the example of FIGURES 4A and 4B provides an illustration of one-dimensional signal processing adaptive filtering. As shown in FIGURE 4A, there is a signal which is a step function, shown as step function signal 401. If noise is introduced to the step function signal, such as represented by noise signal 402, the step function signal becomes a noisy step function signal, such as shown by noisy step function signal 403. It should be appreciated that the signal in FIGURE 4 represents, for example, a single feature extracted from an image signal. In a given signal there may be many other possible features to be extracted based on similar trace modes.

An adaptive filter of an embodiment of the present invention, shown in FIGURE 4B as filter 410, is preferably applied to noisy step function signal 403 in order to remove the noise and thus present a filtered signal, shown as filtered step function signal 404, approximating that of the original signal (step function signal 401. shown in FIGURE 4A). Application of such a filter according to embodiments is to suppress the noise and to preserve the edge of the step function. Accordingly, the sharp edge of the step function remains in filtered step function signal 404 of the illustrated embodiment. Accordingly, adaptive filters according to embodiments of the invention are particularly useful with respect to feature boundaries, such as to retain sharp feature edges, corners, lines, etcetera.

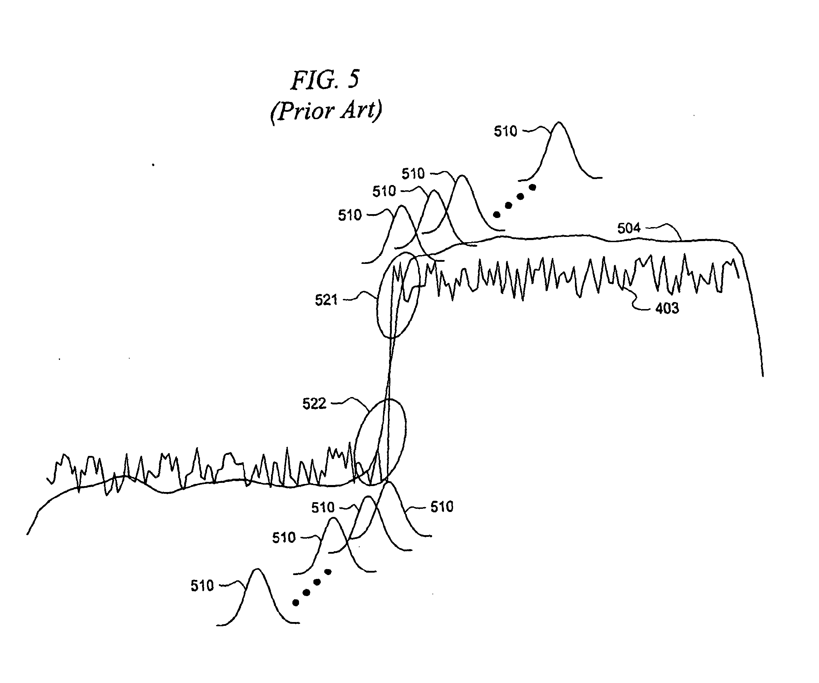

FIGURE 5 shows application of a conventional non-adaptive filter to the foregoing noisy step function signal in order to illustrate the advantages of an adaptive filter of embodiments of the present invention. The filter in FIGURE 5 does not adapt to the signal. Gaussian kernel, shown as filter kernel 510 and referred to herein as G(h), is shown representing the conventional non-adaptive filter. At the edge of the step function, the Gaussian kernel, G(h), is present. Likewise; a few points away from the edge the same Gaussian kernel, G(h), is present. Accordingly, applying the Gaussian kernel and averaging out the signal, the conventional filter provides filtered step function signal 504 in which not only the noise is smoothed out, but also the edges of the step function are smoothed out and thus no longer sharp. Specifically, the sharpness of the edges at areas 521 and 522 are now reduced by the smoothing provided by the filter, and thus an ultrasound image formed from this signal would provide edges which appear as a blurred boundary.

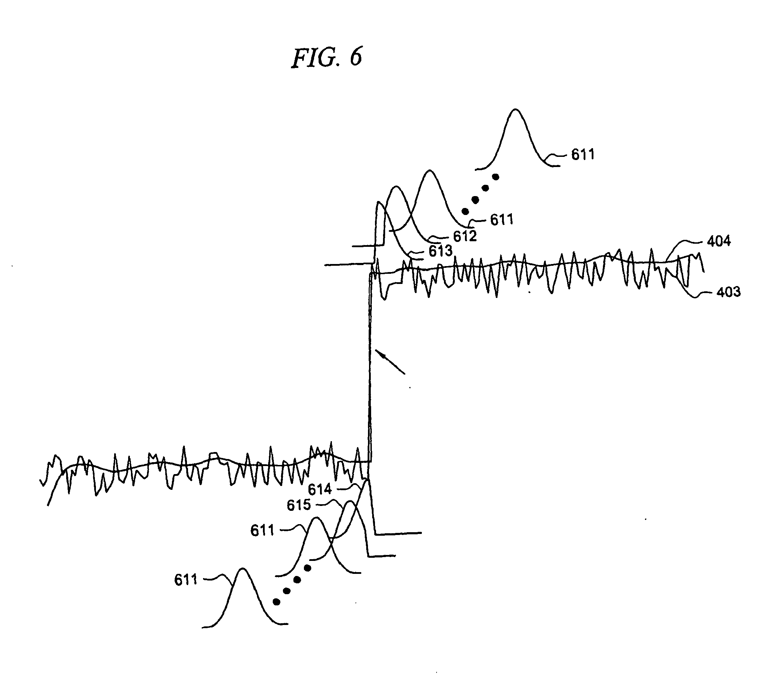

In contrast to the conventional non-adaptive filter illustrated in FIGURE 5, adaptive filter 410 of FIGURE 4B retains the sharp edges of the step function feature. FIGURE 6 illustrates how adaptive filter 410 of an embodiment of the present invention may operate in one-dimensional space. Specifically, FIGURE 6 illustrates how extracted features, here a step function, are used to control the filters that are applied to reduce the noise.

The filter kernel utilized with respect to noisy step function signal 403 at any particular point is represented as filter kernels 611-615 in FIGURE 6. Unlike filter kernel 510 of FIGURE 5, the filter kernel of FIGURE 6 is adaptive. Accordingly, as the filter kernel approaches the step function, the filter kernel is adapted to correspond to the step function feature. Notice that the shape of the Gaussian kernel represented by filter kernels 613 and 612 have a sharp edge on the left side, but the right side is smooth like filter kernel 510 shown in FIGURE 5. Specifically, in the illustrated embodiment filter kernel 613 has approximately half of the filter kernel set to zero, such that only half the Gaussian kernel is being applied to filter out the noisy signal. However, filter kernel 612 has approximately one third of the filter kernel set to zero, such that approximately two thirds of the Gaussian kernel is being applied to filter out the noisy signal. As the filter moves away from the step function edge the filter kernel becomes similar to the one shown in FIGURE 6. Using the adaptive filter of the illustrated embodiment at the edge of the step function, the left hand side of the signal will not be averaged to the right hand side of the signal.

In operation according to the embodiment illustrated in FIGURE 6, as the step function edge is approached the adaptive filter will automatically reduce the weight, or change the filter coefficients, such that the signal on the right hand side of the step function edge will not be averaged with the signal on the left hand side of the step function edge. It should be appreciated that the foregoing filter function may be applied to any signal examined, whether or not there exists a transition of the signal large enough to comprise an "edge." However, once a feature or structure is large enough to comprise an edge, the weighting of the filter is preferably manipulated so that the pixels on either side of the edge are not averaged together. That its, embodiments operate to look for an edge, and when an edge is found, weighting of the filter is adjusted to at the edge, such as to makes the weight of the filter zero or near zero at the edge. It should be appreciated that such edges may be defined in multi-dimensional space, and thus the foregoing concepts of the adaptive filter operating at an edge are not limited to the one-dimensional example illustrated above. Moreover, the dimensions in which such an edge is defined are not limited to spatial and thus may be temporally defined.

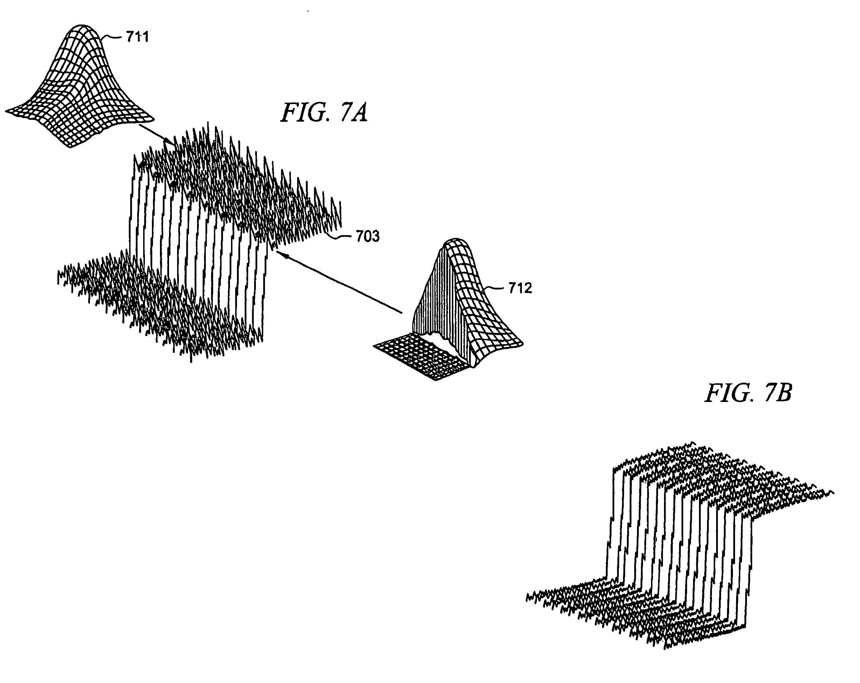

FIGURES 7A and 7B illustrate a two-dimensional case wherein adaptive filtering is applied similarly to the one-dimensional case of FIGURE 6 discussed above. In a two-dimensional case, embodiments of the invention perform as described above, although in two dimensions. For example, as shown in FIGURE 7A, a complete Gaussian filter (shown as filter kernel 711) may be applied on the flat surfaces (e.g., upper and lower plateaus) of the two-dimensional noisy step function signal (shown as noisy step function signal 703). However, near the step function edge the filter kernel preferably drops the filter weight (e.g., filter kernel 712 has approximately one third of the filter kernel set to zero as the filter approaches the step function edge) such that the right hand side would smooth out the top only. Accordingly, the information on the left hand side will not be averaged with the information on the right hand side on the edge. FIGURE 7B illustrates that the sharp edges of the step function are retained in filtered step function signal 704 after application of the adaptive filter.

As discussed above, equations (1) and (2) used with respect to embodiments of the foregoing adaptive filters are cascaded (in the above example, cascaded Gaussian functions), which provides a relatively difficult filter. However, if the local feature is at an edge, the filter kernel will preferably automatically drop the weight. When the weight has been dropped then the filter of embodiments will not be a complete kernel at the edge, as illustrated by filter kernels 612-615 of FIGURE 6, and thus the filter applied may be an appreciably less demanding filter for signal processing than the full filter kernel.

As discussed above, the filter categories represented by equations (1) and (2) include a symmetrical filter (equation (1)) and an asymmetrical filter (equation (2)). A difference is that the asymmetrical filter has an orientation being applied to it, whereas the symmetrical filter is isotropic to all different directions. Accordingly, a filter provided using equation (1) provides filtering as a function of distance, whereas a filter provided using equation (2) provides filtering as a function of gradients. The concepts discussed above may be provided with respect to either filter category (e.g., adjusting filter weighting with respect to distance from a feature and/or with respect to a feature gradient).

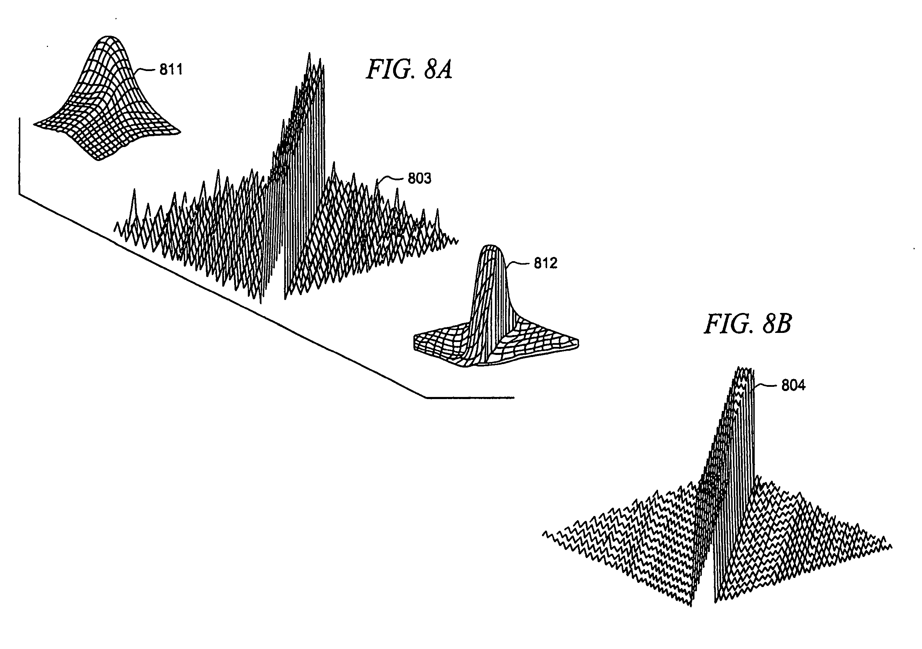

FIGURES 8A and 8B illustrate an exemplary symmetrical adaptive filter according to an embodiment of the invention at a ridge. The filter according to the illustrated embodiment adapts to the image feature. As shown in FIGURE 8A, a complete Gaussian filter (shown as filter kernel 811) may be applied on the flat surfaces (e.g., background) of the noisy ridge signal (shown as noisy ridge signal 803). However, the filter kernel preferably drops the filter weight at the ridge (e.g., filter kernel 812 has approximately the left one third of the filter kernel and the right one third of the filter kernel each set to zero as the filter is applied to the ridge feature) such that the top of the ridge feature only would be smoothed. Accordingly, the information from the background surfaces on the left and right of the ridge feature will not be averaged with the information on the ridge. FIGURE 8B illustrates that the sharp edges of the ridge are retained in filtered ridge signal 804 after application of the adaptive filter.

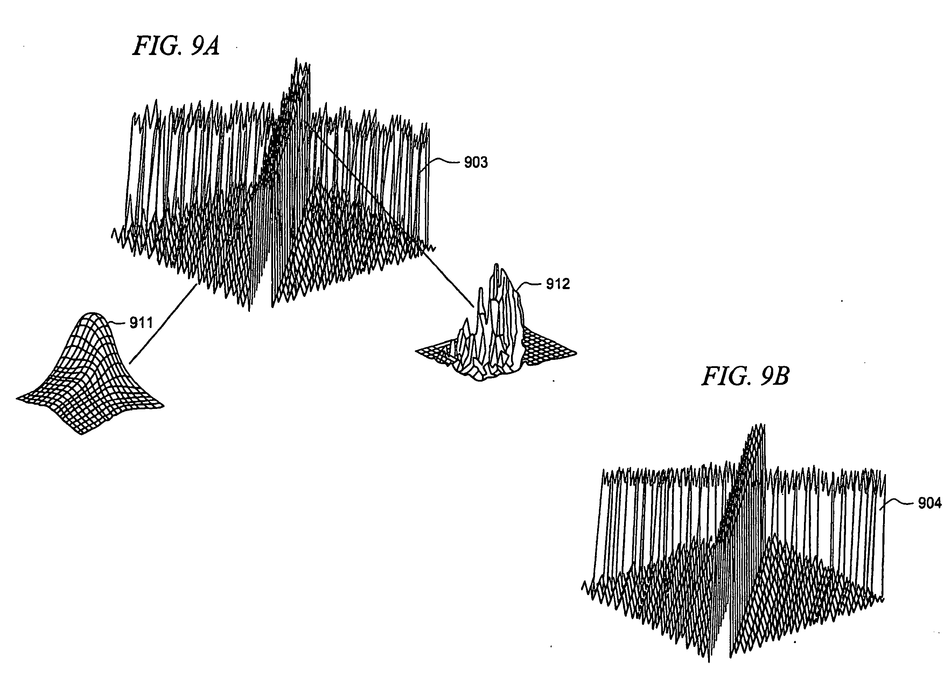

FIGURES 9A and 9B illustrate an exemplary symmetrical adaptive filter according to an embodiment of the invention at a crossing of features (e.g., a crossing of ridges). The filter of the illustrated embodiment adapts to the image feature near the center. As shown in FIGURE 9A, a complete Gaussian filter (shown as filter kernel 911) may be applied on the flat surfaces (e.g., background) of the noisy ridge crossing signal (shown as noisy ridge crossing signal 903). However, the filter kernel preferably drops the filter weight at the ridges and at the ridge crossing (e.g., filter kernel 912 has portions of the filter kernel set to zero in correspondence with a portion of the ridge crossing the filter is being applied to). It should be appreciated that filter kernel 912 of the illustrated embodiment takes on a more complicated shape as compared to filter kernel 812, for example, which preserves the corners of the ridge crossing in addition to preserving the edges of the ridges. Accordingly, the information from the background surfaces on the left and right of the ridge feature will not be averaged with the information on the ridges. FIGURE 9B illustrates that the sharp edges of the ridges as well as the sharp edges of the ridge crossing corners are retained in filtered ridge crossing signal 904 after application of the adaptive filter.

As discussed above, according to preferred embodiments the adaptive filter tries to preserve the corner and also to preserve the sharpness of the edges associated with a crossing of features. Although adaptive filters generally work well in achieving the foregoing, there are some limitations in certain applications. Specifically, using a symmetrical filter, the filtering weight is a function of the local feature, wherein when the weight is suppressed the effective filtering kernel size is smaller. As a result, the filtering effect near the feature edge is less than that at the surface. This phenomena can be seen in FIGURE 8A, wherein a complete Gaussian filter is applied to the background area, but only a subset of the Gaussian filter would be applied along the ridge edge. Accordingly, the amount of filtering applied at the different parts of image would not be the same, resulting in a filtered signal.in which more noise would remain near the ridge as compared to the areas which are away from the ridge. FIGURES 6 and 9A illustrate the phenomena with respect to the respective features therein.

Accordingly, embodiments of the invention implement a steerable filtering process to compensate for the foregoing unequal filtering effect at feature edges. Embodiments develop a number of different steerable filters according to the orientation of the feature. The steerable filters can be extracted or categorized, and the system will preferably apply these filters to the orientations of interest to do additional filtering around the edge. For example, a steerable filter may be provided for application along the ridge of noisy ridge signal 803 of FIGURE 8A, whereas a steerable filter may be provided for application to the background along the edge defined by the background plane and the ridge intersection of noisy ridge signal 803. Various embodiments of the invention include steerable asymmetrical filters in addition to symmetrical filters to improve performance. In such embodiments, the system applies an asymmetrical filter to a feature based on the orientation of the feature.

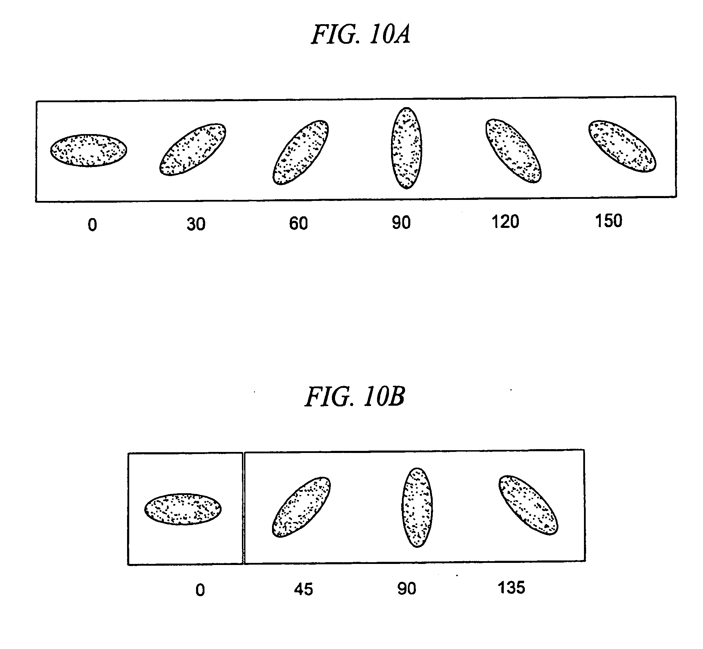

FIGURES 10A and 10B illustrate various example steerable filters for use in at least one embodiment of the invention. According to a preferred embodiment, an orientation of a local feature in a signal to be filtered is determined (e.g., a dominate angle, $\theta$, of the feature may be determined). A steerable filter orientated to correspond with the orientation of the local feature is preferably created (e.g., an asymmetrical steerable filter oriented at angle $\theta$). The steerable filter

is then applied to the feature in the determined orientation for providing a filtered image.

Although the illustrations of FIGURES 10A and 10B show spatial centering that is carried out in the XY space, the same concepts can be extended to other dimensions (e.g., the Z axis and the time axis). For example, various embodiments can be adapted to four dimensions (e.g., X, Y, Z, and time). It should be noted that one or more of the foregoing dimension need not be spatial, and thus may comprise time, intensity, etcetera. Where there are multiple dimensions (e.g., 3 dimensions, measured XYZ) the system can have a different filter oriented differently in different dimensions.

The equation set forth below represents a steerable asymmetrical filter for a relatively simple two-dimensional case according to various embodiments of the invention.

$$G(u,v,g,\nabla g)=e^{-\left(\frac{u^2}{\sigma_u^2}+\frac{v^2}{\sigma_v^2}\right)}e^{-\left(\frac{|\nabla g_u|^2+|\nabla g_v|^2}{\sigma_g(g_r)^2}\right)} \quad (3)$$

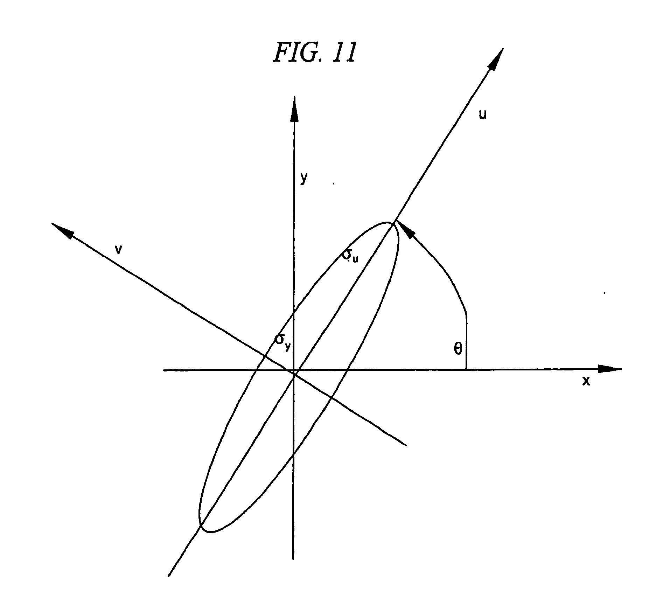

Where *v* in equation (3) is a gradient direction that is perpendicular to a feature edge and *u* in equation (3) is parallel to the feature edge, as shown in FIGURE 11. In the embodiment of equation (3), there are two exponential expressions, here two Gaussian expressions, derived from asymmetrical filter equation (2) discussed above. The first Gaussian expression includes a *u* and a *v* and shows the orientation of the feature. The next Gaussian expression represents a gradient of the grayscale (*g*) along the *u* direction and the gradient of the feature along the *v* direction. The ellipse shown in FIGURE 11 provides a representation illustrating the resulting filter. In the illustrated embodiment, the filter spreads out along the *u* direction and, to a lesser extent, along the perpendicular *v* direction. Assuming this is a Gaussian filter, the spread of the Gaussian is described by Sigma *u* and Sigma *v*. Sigma *v* of the illustrated embodiment is smaller than Sigma *u*. Sigma is the orientation of this *u* axis with regard to the XY axis, the XY axis is the quality of the image, and *u* is the direction of the feature. Sigma *g* is a spread of this particular Gaussian function.

The *uv* space of the illustrated embodiment, which is a feature space, is a rotational transformation as may be represented by the following equation.

$$\begin{bmatrix} u \\ v \end{bmatrix}=\begin{bmatrix} \cos\theta & \sin\theta \\ -\sin\theta & \cos\theta \end{bmatrix}\begin{bmatrix} x \\ y \end{bmatrix} \quad (4)$$

The steerable filter may thus be represented in image space according to the following equation, wherein it is assumed that $\lambda_V >> \lambda_u$ and $|\nabla g_v| » |\nabla g_u|$.

$$G(x,y)-e^{-\left(\frac{(x\cos\theta+y\sin\theta)^2}{\sigma_u^2}+\frac{(-x\sin\theta+y\cos\theta)^2}{\sigma_v^2}\right)}e^{-\left(\frac{|\nabla g_u|^2+|\nabla g_v|^2}{\sigma^2_g(g)}\right)} \quad (5)$$

From the above, it should be appreciated that the system according to embodiments can identify an orientation of a feature, and adapt a filter to work along the particular direction of that feature, using a filter kernel defined by equations (3) or (5), for example. The direction can be the direction of the feature itself. According to embodiments of the invention, the surface can be a feature, the gradient itself can be a feature, the location of structure can be a feature, etc.

The function G can be expressed in *uv* space as:

$$G(u,v)=e^{-\left(\frac{u^2}{\sigma_u^2}+\frac{v^2}{\sigma_v^2}\right)}e^{-\left(\frac{|\nabla g_v|^2}{\sigma^2_g(g_r)}\right)} \quad (6)$$

Assuming that $\lambda_V >> \lambda_u$ and *v* is the gradient direction, and letting $\sigma_u >> \sigma_V$, the gradient of equation (6) may be represented as set forth below.

$$G(u,v) \approx e^{-\frac{|\nabla g_v|^2}{\sigma^2_g(g_-)}} = e^{-\frac{(\bar{n}(x,y)\bar{n}_\perp)^2}{\sigma_0^2}} e^{\frac{|\nabla g_-|^2}{\sigma^2_g(g_-)}} \quad (7)$$

Where $\bar{n}_1$, is a vector parallel to the feature edge and $\bar{n}(x,y)$ is a point at (x,y) in the filtering region.

A gradient direction indicates that the steepness changes in a two-dimensional space. In other words, as the grayscale changes it may be described just like a terrain. On a steep side a gradient is larger. Typically, it is not desirable to smooth the image in that particular direction (e.g., avoid "falling from the cliff"). Accordingly, embodiments of the present invention apply the smoothing function in a direction different than that of the steepest gradient. For example, if the largest gradient direction is gradient $Gv$, the system applies the filter along the $u$ direction because the largest gradient is in the $v$ direction. In other words, various embodiments apply the smoothing filter along the direction that is perpendicular to the direction where the gradient is greatest.

Feature edge orientation may be found according to embodiments of the invention by finding the Eigen vectors from a Hessian matrix which is defined by the Jacobian of the intensity gradient. A Hessian matrix, M, is represented below.

$$M = \begin{bmatrix} \frac{d^2J}{dx^2} & \frac{d^2J}{dx\,dy} \\ \frac{d^2J}{dy\,dx} & \frac{d^2J}{dy^2} \end{bmatrix} = \begin{bmatrix} J_{xx} & J_{xy} \\ J_{yx} & J_{yy} \end{bmatrix} \quad (8)$$

The input image, I, may be first regularized by a Gaussian filter, G, (J = G * I) before taking the derivative. The Eigen values and Eigen vectors of the Hessian matrix, M, can be calculated and represented by the following.

$$v_1 = \begin{bmatrix} \cos\theta \\ -\sin\theta \end{bmatrix}, \quad u_1 = \begin{bmatrix} \sin\theta \\ \cos\theta \end{bmatrix} \quad (9)$$

Where $\lambda_v > \lambda_u$, $v$ is a vector perpendicular to the edge which is oriented at an angle θ to the axis, and $u$ is parallel to the edge in equation (9).

Although the foregoing example utilizes Bigen vectors to locate a feature edge, embodiments of the invention may implement additional or alternative techniques for locating a feature edge. For example, various known digital image processing techniques, computer vision signal processing techniques, morphology image processing, etcetera may be utilized according to embodiments of the invention to locate features. Embodiments of the invention may, for example, implement fuzzy logic for locating features, wherein a fuzzy logic controller analyzes various attributes of a putative feature to make a best feature match conclusion.

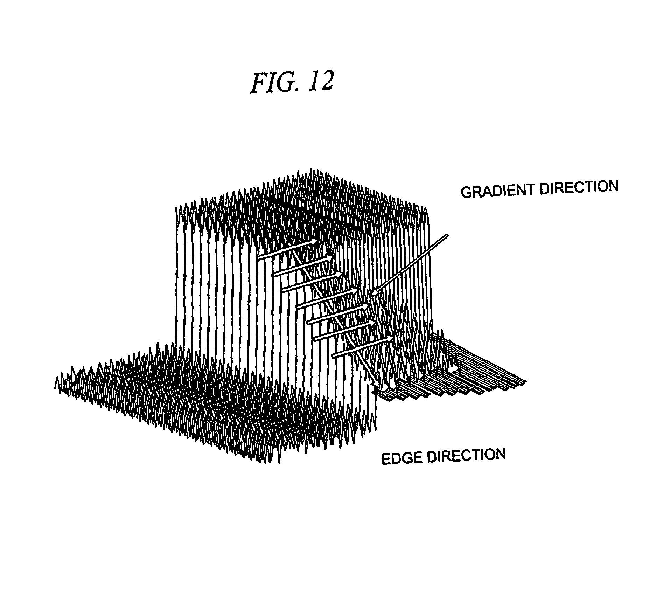

FIGURE 12 illustrates edge direction and gradient direction according to various embodiments of the invention. The image illustrated in FIGURE 12 is a more complicated two-dimensional image than shown above with respect to FIGURES 7B, 8B, and 9B. In the embodiment of FIGURE 12, the third dimension is the grayscale. The gradient direction, shown by the parallel arrows, indicates some steep changes in the two dimensional surface. Perpendicular to the gradient direction is the edge direction. According to preferred embodiments, an adaptive filter is applied along the edge direction. It should be appreciated that the filter orientation can be calculated based on the math of equations (6)-(9) discussed above.

It should be appreciated that the object represented in FIGURE 12 comprises a composite of various primitive features that were described earlier. Specifically, the object of FIGURE 12 has an edge, a ridge, and a slope. When an object has such a combination of features in a locality, an adaptive filter implemented according to embodiments of the invention may be a composite of various filter configurations adapted for various ones of the features, e.g., a combination of the filter configurations described above.

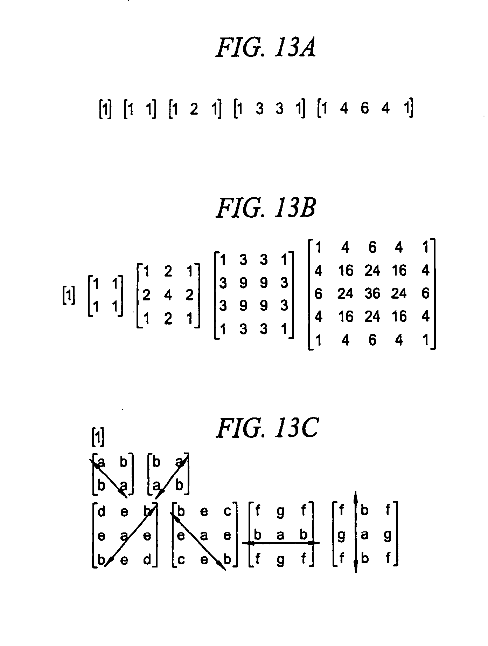

FIGURES 13A-13C illustrate simple example implementations for a Gaussian filter kernel as may be utilized according to embodiments of the invention. FIGURE 12A illustrates a one-dimensional Gaussian filter kernel and FIGURE 13B illustrates a two-dimensional Gaussian filter kernel. In the illustrated examples, implementing a Gaussian filter kernel in a continuum comprises a large number of points. The Gaussian filter kernel is approximated as a binomial expansion using the Central Limit Theorem. The Central Limit Theorem teaches that a pattern may be continued until a large number of points for a Gaussian function are determined. According to this theorem, the Gaussian may be approximated by a binomial kernel that can be generated by repeated averaging of neighbors.

FIGURE 13C shows that the two-dimensional filter of FIGURE 13B is steerable in at least four directions. Specifically, FIGURE 13C represents a simple filter describing a steerable filter in four different directions in two dimensions. Of course, the concept can be applied in any number of directions (e.g., six directions). The values for a, b, c, d, e, f, and g in the filter kernel of FIGURE 13C can be defined according to the straightness of the Gaussian function (e.g., by the parameters of $\sigma_u$ and $\sigma_v$). The major directions of the embodiment illustrated in FIGURE 13C are aa. The direction of three points would be bab, and the rest of the directions fill in different coefficients according to the Gaussian function and of different Sigmas.

In operation according to embodiments of the invention, the system looks at a feature and groups the information for filtering if it follows a certain type of criteria (e.g., pixel similarity). If the criterion is satisfied, then the corresponding pixel is preferably included in the filter process. Otherwise this particular pixel is not included in the filter process. In other words, algorithms of the present invention may operate to look at the pixels and if the pixel is not enough like the pixel next to it, those pixels are not averaged together. However, if the edge orientation is very similar then embodiments may average the pixels together. Generally, if a pixel is near the surface, it is more of a flat area, it is desirable to filter the pixels together. If there are steep changes, e.g., because they are at different regions, then it is generally undesirable to filter the pixels together.

Although the foregoing examples have been discussed with reference to a single feature, it should be appreciated that an image signal may comprise a plurality of features. Accordingly, embodiments of the invention operate to identify various ones of such features and to select and/or apply one or more filters with respect to such features as described above. Moreover, to optimize image filtering, embodiments of the invention implement sub-image processing with respect to providing image filtering. As mentioned above, embodiments of the invention decompose an image into different resolution sub-images or image representations. One or more of the foregoing adaptive and steerable filters are applied to the various features as present in each such sub-image. Although the filters used with respect to any such sub-image may be of different sizes, applied at different orientations with respect to the image, and/or employ various parameters, each such filter may be selected and applied as discussed above.

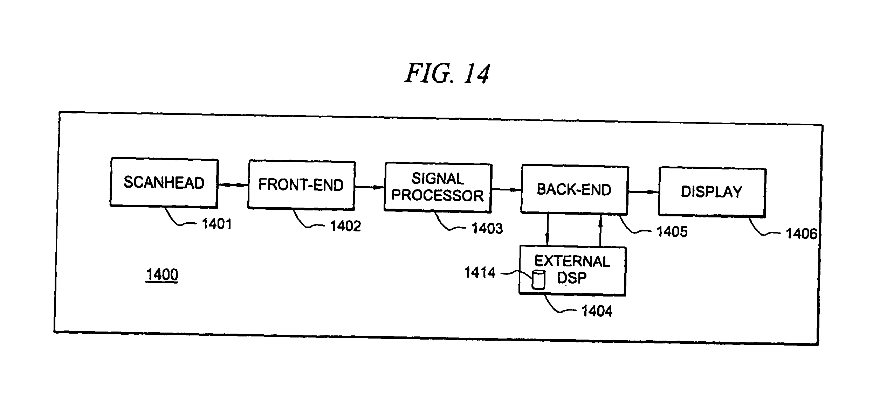

FIGURE 14 shows an exemplary signal path of diagnostic ultrasound system 1400 adapted for use with various embodiments of the invention. It should be appreciated, however, that the invention is not limited to any particular signal path. The illustrated signal path includes scanhead 1401, such as may comprise an ultrasound transducer array as is well known in the art. Other embodiments may replace scanhead 1401 with various circuitry, such as an antenna array in a radio frequency embodiment. Front end circuitry 1402, such as may be provided as a front end application specific integrated circuit (ASIC), may provide, for example, analog to digital and digital to analog signal conversion, beamforming, and/or other front end processing. Signal processor 1403, such as may be provided as a digital signal processor (DSP), may provide, for example, some level of signal filtering, synthetic aperture formation, frequency compounding, Doppler processing, and/or other advanced features. Back end circuitry 1405, such as may be provided as a back end ASIC, may provide, for example, scan conversion, video signal output, etcetera. Display 1406, such as may comprise a cathode ray tube display system, a liquid crystal display system, etcetera, provides a user interface for displaying information to a user, such as a video image generated from ultrasound signals processed by scanhead 1401, front end circuitry 1402, signal processor 1403, and back end circuitry 1405. Additional detail with respect to ultrasound systems having a signal path including a scanhead, front end circuitry, signal processor, back end circuitry, and display as may be adapted for use according to embodiments of the invention are shown and described in United States patent number 5,722,314.

In the exemplary signal path illustrated in FIGURE 14, adaptive filtering of an embodiment of the present invention is performed in external DSP 1404. Specifically, external DSP 1404 of the illustrated embodiment is interfaced with back end circuitry 1405 to receive digital image information therefrom, whether before or after scan conversion by back end circuitry 1405, and to provide filtered digital image information to back end circuitry 1405. However, alternative embodiments may implement adaptive filtering in other circuitry, whether internal or external to a diagnostic ultrasound system signal path and/or whether used in association with a diagnostic ultrasound system. For example, adaptive filtering of embodiments of the present invention may be provided as a part of signal processor 1403, if desired
According to an embodiment of the invention, external DSP 1404 operates under control of software implementing adaptive and steerable filter kernels as described above. In particular, external DSP 1404 of an embodiment implements algorithms to identify one or more features in a digital image signal, determines an orientation of such features, selects and/or configures filter kernels for applying to the feature, and applying the filter kernels to the image signal. Where sub-image processing for image filtering is provided, external DSP 1404 may additionally provide multi-resolution decomposition of the image signal and multi-resolution reconstruction of the filtered signals according to embodiments of the invention.

Embodiments of external DSP 1404 may include, or be in communication with, knowledge base 1414 storing filter configuration information, filter kernel parameter selection criteria, filter kernel parameters, and/or other information useful in developing, configuring, and applying adaptive and steerable filters. For example, knowledge base 1414 may store information associating one or more filter kernel configurations, parameters, etcetera with particular structure as may be identified within an image signal. Additionally or alternatively, knowledge base 1414 may store information used in identifying particular structures, structure orientations, etcetera.

An advanced knowledge base in which the information therein, or some portion thereof, is indexed or otherwise accessible in context may be utilized according to embodiments of the invention. For example, diagnostic ultrasound system 1400 may be used with respect to a plurality of predefined procedures or modes of operation, such as heart scan, kidney scan, upper gasto-intestinal scan, etcetera. Knowledge base 1414 may store information tailored or unique to various ones of theses procedures or modes of operation, such that when a user configures ultrasound system 1400 for use in a selected one of the procedures, an associated portion of knowledge base 1414 is accessed to obtain information for identifying particular structures typical in such a procedure, structure orientations typical in such a procedure, one or more filter kernel configurations tailored for such a procedure, filter parameters tailored for such a procedure, etcetera. For example, a feature may be identified in the image signal, such as using the aforementioned fuzzy logic, and the knowledge base accessed to select a particular filter kernel and/or filter parameters to use with respect to that feature. Where there is prior knowledge with respect to what features are likely to be present in the image signal (e.g., through a selected mode of operation or particular procedure being performed), that information may be factored into the feature identification and/or filter selection determinations. Of course, knowledge base 1414 of embodiments may additionally or alternatively include information with broader applicability or which is otherwise not tailored for any particular context, such as to accommodate uses which are not predetermined.

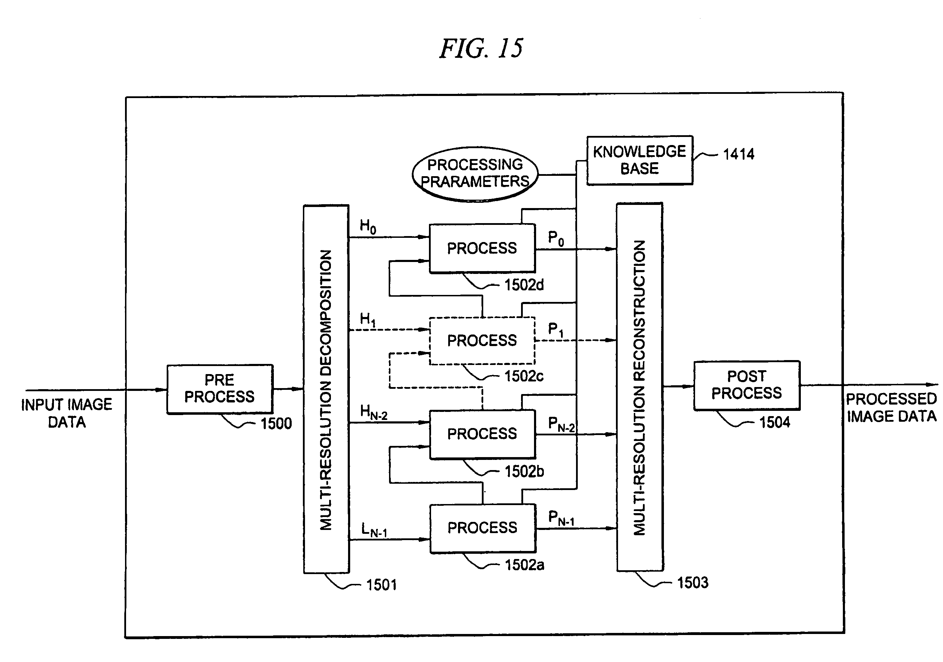

FIGURE 15 shows a functional block diagram of a processing unit, such as may correspond to external DSP 1404 of FIGURE 14, according to various embodiments of the invention. In the illustrated embodiment, pre-processing component 1500 provides processing that takes place on the input image data, such as may comprise some level of pre-filtering, a mapping process, or other process that occurs before adaptive and steerable filtering of the present invention.

After pre-processing, the image signal is decomposed into multi-resolution representations of the image (sub-images) by decomposition block 1501 in the illustrated embodiment. An embodiment can have up to N sub-images, so that the input image could be decomposed into N sub-images (it being understood that the original image from which other sub-images are decomposed may be included as a "sub-image" for filtering as described herein). For example, decomposition block 1501 may begin with a high resolution image signal, decompose that signal into a first decomposed image signal of half the original signal's resolution, decompose the first decomposed image signal into a second decomposed image signal of half the first decomposed image signal's resolution (one quarter of the original signal's resolution), and so on to provide N sub-images each having half the resolution of a next sub-image. For instance, consider an image that has 128 pixels in each dimension, the next level of resolution would be 64x64, and then 32x32, then 16x16, then 8x8, and so on. Decomposition according to preferred embodiments of the invention is accomplished from the top down (e.g., from highest resolution to lowest resolution).

It should be appreciated that the invention is not limited by the number of levels of resolution or the level of decomposition between sub-images. Likewise, the invention is not limited by manner of decomposition. Accordingly, various methods of decomposing the image can be used, including wavelet decomposition and various other manners now known or later developed.

The concept of a multi-resolution image processing according to embodiments of the invention can be illustrated by the human eye. If the viewer stands 10 feet away from the image, the resolution will be less and what is seen is the structure or global features within the image. However, once the viewer is close in, e.g., 1 foot away from the image, then the viewer sees more detail in the image, perhaps at the expense of seeing the global features.

Different levels of abstraction are implemented according to embodiments of the invention for identifying various features within the levels of abstraction, e.g., global features, more localized features, and highly localized features, and applying filtering thereto. For example, embodiments may detect the sides of a feature, and at different sides of feature apply the speckle reduction filter at different sides of feature. The system can use sub-images of lower resolution to extract the global features of the image and the higher resolution sub-images to extract the details that are to be preserved.

Referring again to FIGURE 15, decomposition block 1501 provides the decomposition of the image into sub-images for filter processing. The outputs of decomposition block 1501, shown in the illustrated embodiment as $H_0$ to $L_{n-1}$, are provided to processing blocks 1502 which provide adaptive and/or steerable filtering according to embodiments of the invention. Accordingly, it is in processing blocks 1502 that the filters discussed earlier are applied to the image according to the illustrated embodiment.

Processing blocks 1502 of preferred embodiments demonstrate a kind of dependency. That is, in addition to a respective sub-image being provided to a processing block, information with respect to features from a lower resolution block, where available, are also provided to the processing block (e.g., information with respect to features processed by processing block 1502a are propagated to processing block 1502b). This additional information provides a foundation from the lower resolution sub-image which guides the processing which takes place with respect to the higher resolution sub-image. Accordingly, preferred embodiments of the invention provide image filtering using processing blocks 1502 from the bottom up (e.g., from lowest resolution to highest resolution). Such bottom up processing provides advantages and processing economies in identifying global features and working into localized features and highly localized features.

The processed sub-imaged output by processing blocks 1502, shown in the illustrated embodiment as $P_0$ to $P_{N-1}$, are provided to reconstruction block 1503 for multi-resolution image reconstruction. That is, reconstruction block 1503 of embodiments provides combining of the sub-images (e.g., the opposite of the decomposition takes place). The system of the illustrated embodiment combines the output from individual processing blocks 1502 in an intelligent way to produce the filtered image for a human user. Image reconstruction according to embodiments of the invention may implement up-sampling and combining. For example, a lower resolution sub-image may be up-sampled to the resolution of a next higher resolution sub-image and the two sub-images combined. Such up-sampling and combining may be repeated until the resolution of the original image is reached. Preferred embodiments of the invention, therefore, provide image reconstruction using reconstruction block 1503 from the bottom up (e.g., from lowest resolution to highest resolution). It should be appreciated, however, that the invention is not limited by manner of combining, as any manner now known or later developed may be used in one or more embodiments.

Post processing component 1504 may be used after reconstruction of the image for providing additional signal processing as desired. For example, after the image is processed according to the present invention, it may be desirable to increase the intensity, to remap the grey scale, to do additional filtering to take care of the medial processing, etcetera. Accordingly, post processing as provided by post processing component1504 is usually a small component of the overall signal processing.

As discussed above with reference to FIGURE 14, knowledge base 1414 may be used to store various application-specific data. The processing done in processing blocks 1502 is often dependent on the features, the various attributes that are expected from the image, etcetera, and thus knowledge base 1414 may provide information useful in tailoring the processing to the various features. It may also be desirable to provide some control over this processing that is dependent on the type of scanhead that is used, the type of emitting application that is used, etcetera. For example, cardiology may use cardiology-specific instruments. Application specific tuning of this processing is carried out using information from knowledge base 1414, which provides additional parameters utilized by the processing blocks. The knowledge base can include, for example, prior knowledge about the composition of the image that can be taken advantage of. For instance, where it is known that the image is to be of the heart, embodiments can apply a specialized algorithm that makes the application better for imaging hearts.

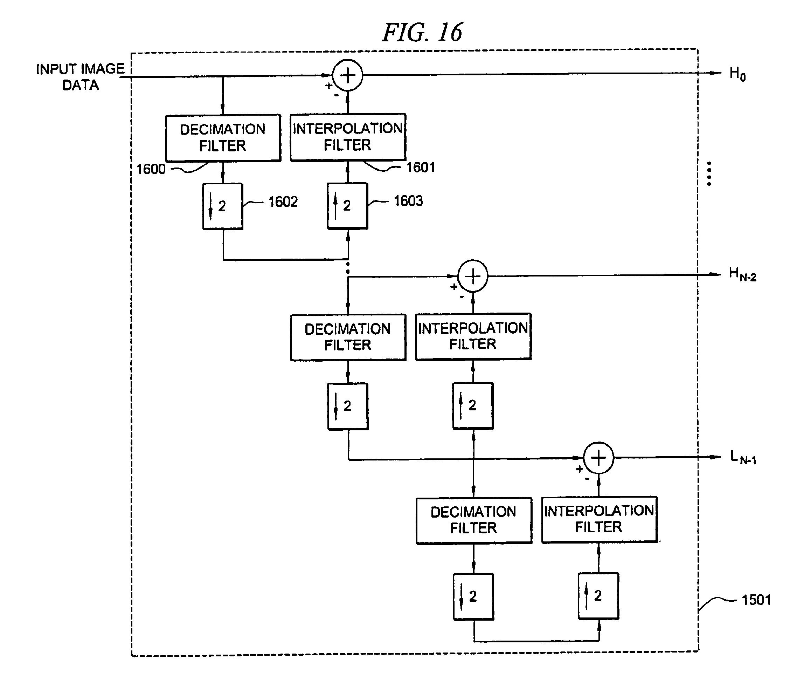

FIGURE 16 shows detail with respect to an embodiment of decomposing block 1501. In the embodiment of FIGURE 16, decimation filters are used to produce sub-images having one-half the resolution of a next higher order image or sub-image. For example, decimation filter 1600 is used with respect to the original noisy image signal to produce sub-image 1602 having one-half resolution. This sub-image is used as an input to a next decimation filter for producing another sub-image. This sub-image is also used as an input (shown as sub-image 1603) to interpolation filter 1601. This interpolation filter is used for reconstructing a smooth version of the original image. This smoothed version is subtracted from the original image to produce a high pass version of the original image.

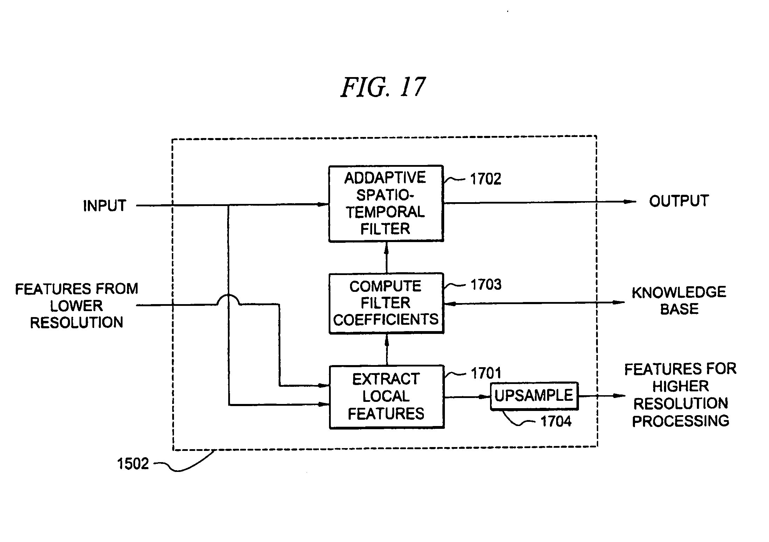

FIGURE 17 shows detail with respect to an embodiment of processing blocks 1502. As discussed above, processing blocks 1502 are where the adaptive filters of embodiments of the invention are applied. Accordingly, the input signal is one of the sub-images. From this sub-image input and from information regarding the features from lower resolution sub-image processing, if available, local features are extracted by feature extraction block 1701. Information regarding the features is provided by feature extraction block 1701 of the illustrated embodiment to up-sampler block 1704 for providing feature information to a processing block used with respect to a higher order resolution sub-image. Information regarding the features is also provided by feature extraction block 1704 to filter configuration block 1703. Filter configuration block 1703 uses feature information, preferably in combination with information available from a knowledge base, to select, configure, and/or compute one or more adaptive and/or steerable filters for applying to the sub-image, as discussed in detail above. One or more filters, as determined by filter configuration block 1703, are applied to the sub-image by filtering block 1702. It should be appreciated that adaptive and/or spatial-temporal filters applied by filtering block 1702 need not be a single filter. For example, a cascade of symmetrical filters followed by an asymmetrical filter may be applied to the sub-image according to embodiments of the invention.

As shown, processing block 1502 of FIGURE 17 outputs information with respect to the extracted features for use in the next higher resolution processing block (where appropriate), information with respect to the features from the lower resolution processing block (where appropriate) are provided to processing block 1502. Information with respect to the features of the lower resolution block are preferably used in conjunction with information with respect to the features extracted at the current resolution level to compute or otherwise select the adaptive filter coefficient.

In this example, the features used are from two immediate resolution levels, which may help to provide consistency between the different processing blocks.

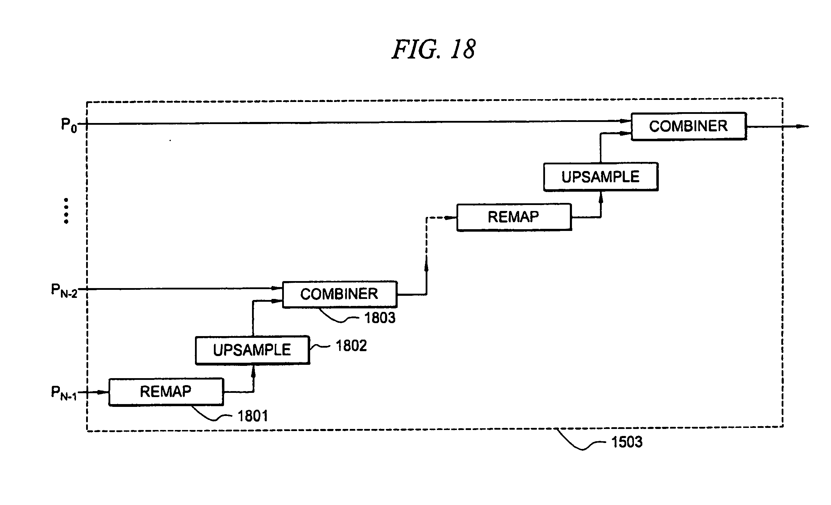

FIGURE 18 shows detail with respect to an embodiment of reconstruction block 1503. The embodiment of FIGURE 18 shows how the output of sub-image processing blocks 1502 are combined to form a composite image. Specifically, remapping block 1801 allows readjustment of image intensity as necessary. The mapping function used here is obtained from the knowledge base 1414 of FIGURE 14. The output of remapping block 1801 is provided to up-sampler 1802 for up-sampling of the sub-image to a resolution of the next higher sub-image. Combiner 1803 then combines the up-sampled sub-image with the next higher sub-image, and so on.

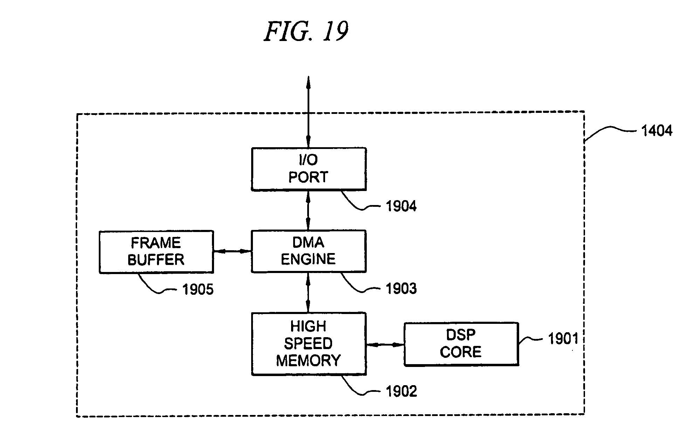

FIGURE 19 illustrates an exemplary DSP hardware configuration adapted according to one or more embodiments to provide the functional blocks discussed above with respect to external DSP 1404. The illustrated embodiment includes I/O port 1904 for interfacing the DSP with other circuitry, such as to receive a noisy image signal, to provide output of a filtered image signal, to interface with knowledge base 1414, etcetera. DSP 1401 of the illustrated embodiment includes DMA engine 1903, frame buffer 1905, high speed memory 1902, and DSP core 1901. DSP 1404 of the illustrated embodiment includes DMA engine 1903, frame buffer 1905, high-speed memory 1902, and DSP core 1901. DSP core 1901 comprises an arithmetic logic unit (ALU). High-speed memory 1902 provides memory for use by DSP core 1901 during computations. DMA engine 1903 facilitates background data transfers between high-speed memory 1903 and external, typically slower, memory where frame buffer 1905 resides. Although a particular configuration of DSP is shown in FIGURE 19, it should be appreciated that the invention is not limited to any particular DSP or other kind of processor to implement the multi-resolution adaptive filtering described above. In fact, such processing may be performed, for example, by Field Programmable Gate Array (FPGA), Application Specific Integrated Circuit (ASIC), general purpose microprocessor, or the like.

An advantage of some embodiments is that adaptive filters may provide better resolution by preserving edges. When combined with multi-resolution decomposition, the high performance processing may be able to be performed more efficiently. Another advantage of some embodiments is that the multi-resolution processing can provide a more efficient way to extract information from the signals, from high-level features to lower-level details. In fact, some embodiments are implementable in a portable device because the more efficient processing provides for higher performance with lower power usage and less computing capability.

Much of the computing involved in imaging is solving differential equations. For example, if a dominant feature that spans a large area of the image is to be extracted, a very big filter may be created using traditional processing devices. However, various embodiments of the present invention break the signal down into lower resolution sub-images, that allow the feature to be identified with a smaller kernel because fewer pixels or points are to be processed. For example assuming a kernel of 30 x 30, or 50 x 50 adapted to different pixels. However, using the concepts of the present invention, wherein multi-resolution decomposition is employed, a smaller filter kernel may be used, for example, a 3 x 3 or 5 x 5. Additional performance enhancements may be provided through using simplified techniques, such as using pre-computed lookup tables and such for processing blocks 1502. High performance filtering with lower power usage and lower cost may provide for high quality portable imaging devices, such as ultrasound devices.

Although the present invention and its advantages have been described in detail, it should be understood that various changes, substitutions and alterations can be made herein without departing from the scope of the invention as defined by the appended claims. Moreover, the scope of the present application is not intended to be limited to the particular embodiments of the methods described in the specification.

## Claims

**1.** A method for processing an image, said method comprising:

decomposing said image into a plurality of sub-images;
identifying one or more structures within each sub-image of said plurality of sub-images; and
applying adaptive filters separately to each sub-image of said plurality of sub-images, wherein said adaptive filters are adaptive to an aspect of an associated structure of said one or more structures;
**characterised in that** said method comprises determining a gradient of said one or more structures, said gradient having a gradient direction along which said gradient is greatest and an edge direction perpendicular to said gradient direction, wherein applying an adaptive filter comprises applying more smoothing along said edge direction than said gradient direction of said associated structure using a filter defined by

$$G(u,v) = e^{-\left(\frac{u^2}{\sigma_u^2}+\frac{v^2}{\sigma_v^2}\right)} e^{-\left(\frac{|\nabla g_v|^2}{\sigma_g^2(g_v)}\right)},$$

where v is said gradient direction, u is said edge direction, $\sigma_v$ is a spread of the filter in said gradient direction, $\sigma_u$ is a spread of the filter in said edge direction, $\nabla g_v$ is said gradient in the gradient direction, and $\sigma_g(g_v)$ is a spread of the filter.

**2.** The method of claim 1, wherein said plurality of sub-images comprise sub-images of different resolutions.

**3.** The method of claim 2, wherein the sub-images of said plurality of sub-images are each one-half the resolution of a next higher resolution sub-image.

**4.** The method of claim 2, wherein said decomposing is accomplished from a highest resolution to a lowest resolution of said different resolutions.

**5.** The method of claim 1, wherein said identifying one or more structures within each sub-image comprises:

accepting structure information with respect to another sub-image of said plurality of sub-images for use in identifying one or more structures of a particular sub-image.

**6.** The method of claim 5, wherein said identifying one or more structures within each sub-image is accomplished from a lowest resolution to a highest resolution.

**7.** The method of claim 1, wherein said identifying one or more structures within each sub-image comprises:

identifying a structure edge within a sub-image.

**8.** The method of claim 1, wherein said identifying one or more structures within each sub-image comprises:

identifying a gradient within a sub-image.

**9.** The method of claim 1, wherein said identifying one or more structures within each sub-image comprises:

accessing a knowledge base storing information with respect to image structures associated with a particular mode of operation of a host system.

**10.** The method of claim 1, wherein said identifying one or more structures within each sub-image comprises:

accessing a knowledge base storing information with respect to image structures associated with a particular procedure performed using a host system.

**11.** The method of claim 1, wherein a sub-image is defined by a sequence of frames and said step of applying adaptive filters comprises:

using inter-frame information in filtering a structure of a sub-image.

**12.** The method of claim 1, wherein a sub-image is defined by a sequence of frames and said step of applying adaptive filters comprises:

using intra-frame information in filtering a structure of a sub-image.

**13.** The method of claim 1, wherein said adaptive filters are adaptive with respect to a spatial aspect of an associated structure of a sub-image.

**14.** The method of claim 1, wherein said adaptive filters are adaptive with respect to a temporal aspect of an associated structure of a sub-image.

**15.** The method of claim 1, wherein said adaptive filters are adaptive with respect to an edge of an associated structure of a sub-image.

**16.** The method of claim 1, wherein said adaptive filters are adaptive with respect to a slope of an associated structure of a sub-image.

**17.** The method of claim 1, wherein said adaptive filters are adaptive with respect to a gradient of an associated structure of a sub-image.

**18.** The method of claim 1, further comprising:

determining one or more filter parameters for use in said applying adaptive filters as a function of said one or more structures.

**19.** The method of claim 18, wherein said determining said one or more filter parameters comprises:

accessing a knowledge base storing information with respect to said structure.

**20.** The method of claim 1, further comprising:

determining an orientation of at least one of said one or more structures.

**21.** The method of claim 20, wherein said applying adaptive filters comprises:

steering an adaptive filter of said adaptive filters as a function of said orientation of said at least one structure.

**22.** The method of claim 20, wherein said orientation comprises a spatial orientation.

**23.** The method of claim 20, wherein said orientation comprises a temporal orientation.

**24.** The method of claim 1, further comprising:

reconstructing a filtered image from said plurality of sub-images after having applied adaptive filters separately to each said sub-image.

**25.** The method of claim 24, wherein said decomposing said image, said applying adaptive filters, and said reconstructing said filtered image are performed a plurality of times.

**26.** The method of claim 25, wherein ones of said plurality of times are performed upon alteration or application of a change to the image.

**27.** The method of claim 1, further comprising:

determining one or more adaptive filter parameters as a function of said one or more structures identified within each sub-image;
applying adaptive filters to implement one or more of said adaptive filter parameters; and
reconstructing a filtered image from said plurality of sub-images after having applied adaptive filters separately to each said sub-image.

**28.** The method of claim 27, wherein said sub-images comprise sub-images of different resolutions, said each said different resolution being one-half of a next higher resolution.

**29.** The method of claim 27, wherein said decomposing said image is accomplished from a highest resolution to a lowest resolution, and wherein said reconstructing said filtered image is accomplished from a lowest resolution to a highest resolution.

**30.** The method of claim 27, wherein said identifying one or more structures within each said sub-image comprises:

identifying a first one or more structures within a lowest resolution sub-image;
providing information with respect to said one or more structures to a process for identifying one or more structures within a higher resolution sub-image; and
identifying a second one or more structures within said higher resolution sub-image using said information with respect to said first one or more structures.

**31.** The method of claim 27, wherein said determining said one or more adaptive filter parameters comprises:

accessing a knowledge base storing information with respect to said structure.

**32.** The method of claim 27, wherein said adaptive filters are adaptive with respect to a spatial aspect of an associated structure of a sub-image.

**33.** The method of claim 27, wherein said adaptive filters are adaptive with respect to a temporal aspect of an associated structure of a sub-image.

**34.** The method of claim 27, further comprising:

determining an orientation of at least one of said one or more structures.

**35.** The method of claim 34, wherein said applying adaptive filters comprises:

steering an adaptive filter of said adaptive filters as a function of said orientation of said at least one structure.

**36.** A system for processing an image, said system comprising:

a multi-resolution image decomposer operable to receive image data and to produce a plurality of sub-images therefrom, each of said sub-images being of a different resolution;
a plurality of processing blocks each operable to identify one or more structures within an associated sub-image of said plurality of sub-images and to provide filtering of said associated sub-image as a function of said one or more structures, wherein one or more of said processing blocks receive information with respect to structures identified with respect to another sub-image by another processing block of said plurality of processing blocks; and
an image reconstructer operable to receive outputs from said plurality of processing blocks and to produce a combined image therefrom;
**characterised in that** said system is operable to determine a gradient of one of said one or more structures, said gradient having a gradient direction along which said gradient is greatest and an edge direction perpendicular to said gradient direction, wherein said filtering comprises applying more smoothing along said edge direction than said gradient direction of said structure using a filter defined by

$$G(u,v) = e^{-\left(\frac{u^2}{\sigma_u^2}+\frac{v^2}{\sigma_v^2}\right)} e^{-\left(\frac{|\nabla g_v|^2}{\sigma_g^2(g_v)}\right)},$$

where v is said gradient direction, u is said edge direction, $\sigma_v$ is a spread of the filter in said gradient direction, $\sigma_u$ is a spread of the filter in said edge direction, $\nabla g_v$ is said gradient in the gradient direction, and $\sigma_g(g_v)$ is a spread of the filter.

**37.** The system of claim 36, wherein said plurality of processing blocks are provided by a digital signal processor.

**38.** The system of claim 37, wherein said multi-resolution image decomposer and said image reconstructer are provided by said digital signal processor.

**39.** The system of claim 36, further comprising:

a database storing filter parameter information for use by said plurality of processing blocks.

**40.** The system of claim 39, wherein said filter parameter information is associated with particular structures as identifiable by said processing blocks.

**41.** The system of claim 39, wherein said filter parameter information is associated with particular modes of operation of said system.

**42.** The system of claim 39, wherein said filter parameter information is associated with particular procedures performed using said system.

**43.** The system of claim 36, wherein said filtering comprises adaptive filtering.

**44.** The system of claim 43, wherein said adaptive filtering comprises adaptation of one or more filter parameters as a function of a spatial aspect of an associated one of said structures.

**45.** The system of claim 43, wherein said adaptive filtering comprises adaptation of one or more filter parameters as a function of a temporal aspect of an associated one of said structures.

**46.** The system of claim 36, wherein said filtering comprises steered filtering.

**47.** The system of claim 46, wherein said steered filtering comprises steering said filter as a function of an orientation of an associated one of said structures.

**Patentansprüche**

**1.** Verfahren zum Bearbeiten eines Bildes, wobei das Verfahren Folgendes aufweist:

- Zerlegen des Bildes in mehrere Teilbilder;
- Identifizieren von einer oder mehreren Strukturen innerhalb eines jeden Teilbildes der mehreren Teilbilder; und
- Anwenden von Adaptivfiltern gesondert auf jedes der Teilbilder der mehreren Teilbilder, wobei die Adaptivfilter für einen Aspekt einer zugehörigen Struktur der einen oder mehreren Strukturen adaptiv sind;

**dadurch gekennzeichnet, dass**
das Verfahren ein Bestimmen eines Gradienten der einen oder mehreren Strukturen umfasst, wobei der Gradient eine Gradientenrichtung aufweist, entlang derer der Gradient am größten ist, und eine senkrecht zur Gradientenrichtung verlaufende Kantenrichtung, und wobei ein Anwenden eines Adaptivfilters ein Anwenden von mehr Glättung entlang der Kantenrichtung als in Gradientenrichtung der zugehörigen Struktur umfasst, wobei ein folgendermaßen definierter Filter verwendet wird

$$G(u,v) = e^{-\left(\frac{u^2}{\sigma_u^2}+\frac{v^2}{\sigma_v^2}\right)} e^{-\left(\frac{|\nabla g_v|^2}{\sigma_g^2(g_v)}\right)},$$

worin v die Gradientenrichtung, u die Kantenrichtung, $\sigma_v$ eine Streuung des Filters in der Gradientenrichtung, $\sigma_u$ eine Streuung des Filters in der Kantenrichtung, $\nabla g_v$ den Gradienten in der Gradientenrichtung und $\sigma_g(g_v)$ eine Streuung des Filters angibt.

**2.** Verfahren nach Anspruch 1, worin die mehreren Teilbilder Teilbilder unterschiedlicher Auflösung umfassen.

**3.** Verfahren nach Anspruch 2, worin die Teilbilder der mehreren Teilbilder jeweils die halbe Auflösung eines Teilbildes mit der nächsthöheren Auflösung aufweisen.

**4.** Verfahren nach Anspruch 2, worin das Zerlegen von einer höchsten Auflösung zu einer niedrigsten Auflösung der unterschiedlichen Auflösungen ausgeführt wird.

**5.** Verfahren nach Anspruch 1, worin das Identifizieren von einer oder mehreren Strukturen innerhalb eines jeden Teilbildes ein Annehmen von Strukturinformation bezüglich eines anderen Teilbildes der mehreren Teilbilder zur Verwendung bei der Identifizierung von einer oder mehreren Strukturen eines bestimmten Teilbildes umfasst.

**6.** Verfahren nach Anspruch 5, worin das Identifizieren von einer oder mehreren Strukturen innerhalb eines jeden Teilbildes von einer niedrigsten Auflösung zu einer höchsten Auflösung ausgeführt wird.

**7.** Verfahren nach Anspruch 1, worin das Identifizieren von einer oder mehreren Strukturen innerhalb eines jeden Teilbildes ein Identifizieren einer Strukturkante innerhalb eines Teilbildes umfasst.

**8.** Verfahren nach Anspruch 1, worin das Identifizieren von einer oder mehreren Strukturen innerhalb eines jeden Teilbildes ein Identifizieren eines Gradienten innerhalb eines Teilbildes umfasst.

**9.** Verfahren nach Anspruch 1, worin das Identifizieren von einer oder mehreren Strukturen innerhalb eines jeden Teilbildes ein Zugreifen auf eine Wissensdatenbank umfasst, die Informationen in Bezug auf Bildstrukturen speichert, die mit einer bestimmten Betriebsart eines Hostsystems verknüpft sind.

**10.** Verfahren nach Anspruch 1, worin das Identifizieren von einer oder mehreren Strukturen innerhalb eines jeden Teilbildes ein Zugreifen auf eine Wissensdatenbank umfasst, die Informationen in Bezug auf Bildstrukturen speichert, die mit einer bestimmten Prozedur unter Verwendung eines Hostsystems verknüpft sind.

**11.** Verfahren nach Anspruch 1, worin ein Teilbild durch eine Abfolge von Frames definiert ist und der Schritt zum Anwenden von Adaptivfiltern ein Verwenden von Frame-zu-Frame-Informationen beim Filtern einer Struktur eines Teilbildes umfasst.

**12.** Verfahren nach Anspruch 1, worin ein Teilbild durch eine Abfolge von Frames definiert ist und der Schritt zum Anwenden von Adaptivfiltern ein Verwenden von Intra-Frame-Informationen beim Filtern einer Struktur eines Teilbildes umfasst.

**13.** Verfahren nach Anspruch 1, worin die Adaptivfilter bezüglich eines räumlichen Aspekts einer zugehörigen Struktur eines Teilbildes adaptiv sind.

**14.** Verfahren nach Anspruch 1, worin die Adaptivfilter bezüglich eines zeitlichen Aspekts einer zugehörigen Struktur eines Teilbildes adaptiv sind.

**15.** Verfahren nach Anspruch 1, worin die Adaptivfilter bezüglich einer Kante einer zugehörigen Struktur eines Teilbildes adaptiv sind.

**16.** Verfahren nach Anspruch 1, worin die Adaptivfilter bezüglich einer Flanke einer zugehörigen Struktur eines Teilbildes adaptiv sind.

**17.** Verfahren nach Anspruch 1, worin die Adaptivfilter bezüglich eines Gradienten einer zugehörigen Struktur eines Teilbildes adaptiv sind.

**18.** Verfahren nach Anspruch 1, das ferner ein Bestimmen von einem oder mehreren Filterparametern zur Verwendung bei dem Anwenden von Adaptivfiltern als Funktion der einen oder mehreren Strukturen umfasst.

**19.** Verfahren nach Anspruch 18, worin das Bestimmen des einen oder der mehreren Filterparameter eine Zugreifen auf eine Wissensdatenbank umfasst, die Informationen bezüglich der Struktur speichert.

**20.** Verfahren nach Anspruch 1, das ferner ein Bestimmen einer Ausrichtung von zumindest einer der einen oder mehreren Strukturen umfasst.

**21.** Verfahren nach Anspruch 20, worin das Anwenden der Adaptivfilter ein Steuern eines Adaptivfilters der Adaptivfilter als Funktion der Ausrichtung der zumindest einen Struktur umfasst.

**22.** Verfahren nach Anspruch 20, worin die Ausrichtung eine räumliche Ausrichtung umfasst.

**23.** Verfahren nach Anspruch 20, worin die Ausrichtung eine zeitliche Ausrichtung umfasst.

**24.** Verfahren nach Anspruch 1, das ferner ein Rekonstruieren eines gefilterten Bildes aus den mehreren Teilbildern umfasst, nachdem Adaptivfilter auf jedes der Teilbilder gesondert angewandt wurden.

**25.** Verfahren nach Anspruch 24, worin das Zerlegen des Bildes, das Anwenden der Adaptivfilter und das Rekonstruieren des gefilterten Bildes mehrmals ausgeführt wird.

**26.** Verfahren nach Anspruch 25, worin eines der mehreren Male bei Änderung oder Anwendung einer Veränderung des Bildes ausgeführt wird.

**27.** Verfahren nach Anspruch 1, das ferner Folgendes umfasst:

- Bestimmen von einem oder mehreren Adaptivfilterparametern als Funktion der innerhalb eines jeden Teilbildes identifizierten einen oder mehreren Strukturen;
- Anwenden von Adaptivfiltern zum Anwenden von einem oder mehreren der Adaptivfilterparameter; und
- Rekonstruieren eines gefilterten Bildes aus den mehreren Teilbildern, nachdem Adaptivfilter auf jedes der Teilbilder gesondert angewandt wurden.

**28.** Verfahren nach Anspruch 27, worin die Teilbilder Teilbilder unterschiedlicher Auflösungen umfassen und jede der unterschiedlichen Auflösungen die Hälfte einer nächsthöheren Auflösung beträgt.

**29.** Verfahren nach Anspruch 27, worin das Zerlegen des Bildes von einer höchsten Auflösung zu einer niedrigsten Auflösung ausgeführt wird, und worin das Rekonstruieren des gefilterten Bildes von einer niedrigsten zu einer höchsten Auflösung ausgeführt wird.

**30.** Verfahren nach Anspruch 27, worin das Identifizieren von einer oder mehreren Strukturen innerhalb eines jeden der Teilbilder Folgendes umfasst:

- Identifizieren von einer ersten oder von mehreren ersten Strukturen innerhalb eines Teilbildes mit der niedrigsten Auflösung;
- Bereitstellen von Informationen bezüglich der einen oder mehreren Strukturen an einen Prozess zum Identifizieren von einer oder mehreren Strukturen innerhalb eines Teilbildes mit einer höheren Auflösung; und
- Identifizieren von einer zweiten oder von mehreren zweiten Strukturen innerhalb des Teilbildes mit der höheren Auflösung unter Verwendung der Informationen bezüglich der einen ersten oder der mehreren ersten Strukturen.

**31.** Verfahren nach Anspruch 27, worin das Bestimmen der einen oder mehreren Adaptivfilterparameter ein Zugreifen auf eine Wissensdatenbank umfasst, die Informationen bezüglich der Struktur speichert.

**32.** Verfahren nach Anspruch 27, worin die Adaptivfilter bezüglich eines räumlichen Aspekts einer zugehörigen Struktur eines Teilbildes adaptiv sind.

**33.** Verfahren nach Anspruch 27, worin die Adaptivfilter bezüglich eines zeitlichen Aspekts einer zugehörigen Struktur eines Teilbildes adaptiv sind.

**34.** Verfahren nach Anspruch 27, das ferner ein Bestimmen einer Ausrichtung von zumindest einer der einen oder mehreren Strukturen umfasst.

**35.** Verfahren nach Anspruch 34, worin das Anwenden der Adaptivfilter eine Steuern eines Adaptivfilters der Adaptivfilter als Funktion der Ausrichtung der zumindest einen Struktur umfasst.

**36.** System zum Bearbeiten eines Bildes, wobei das Bild Folgendes umfasst:

- einen Mehrfachauflösungs-Bildzerleger, der zum Erhalt von Bilddaten und zum Erzeugen mehrerer Teilbilder daraus ausgebildet ist, wobei jedes der Teilbilder eine andere Auflösung besitzt;
- mehrere Verarbeitungsblöcke, von denen jeder zum Identifizieren von einer oder mehreren Strukturen innerhalb eines zugehörigen Teilbildes der mehreren Teilbilder und zum Bereitstellen einer Filterung des zugehörigen Teilbildes als Funktion der einen oder mehreren Strukturen ausgebildet ist, wobei ein oder mehrere der Verarbeitungsblöcke Information bezüglich von Strukturen erhalten, die von einem anderen Verarbeitungsblock der mehreren Verarbeitungsblöcke unter Bezugnahme auf ein anderes Teilbild identifiziert wurden; und

- einen Bildrekonstruierer, der zum Erhalt von Ausgaben der mehreren Verarbeitungsblöcke und zum Erzeugen eines daraus kombinierten Bildes ausgebildet ist;

**dadurch gekennzeichnet, dass** das System zum Bestimmen eines Gradienten der einen oder mehreren Strukturen ausgebildet ist, wobei der Gradient eine Gradientenrichtung aufweist, entlang derer der Gradient am größten ist, und eine senkrecht zur Gradientenrichtung verlaufende Kantenrichtung, und wobei das Filtern ein Anwenden von mehr Glättung entlang der Kantenrichtung als in Gradientenrichtung der Struktur umfasst, wobei ein folgendermaßen definierter Filter verwendet wird

$$G(u,v) = e^{-\left(\frac{u^2}{\sigma_u^2}+\frac{v^2}{\sigma_v^2}\right)} e^{-\left(\frac{|\nabla g_v|^2}{\sigma_g^2(g_v)}\right)},$$

worin v die Gradientenrichtung, u die Kantenrichtung, $\sigma_v$ eine Streuung des Filters in der Gradientenrichtung, $\sigma_u$ eine Streuung des Filters in der Kantenrichtung, $\nabla g_v$ den Gradienten in der Gradientenrichtung und $\sigma_g(g_v)$ eine Streuung des Filters angibt.

**37.** System nach Anspruch 36, worin die mehreren Verarbeitungsblocks von einem digitalen Signalprozessor bereitgestellt werden.

**38.** System nach Anspruch 37, worin der Mehrfachauflösungs-Bildzerleger und der Bildrekonstruierer von dem digitalen Signalprozessor bereitgestellt werden.

**39.** System nach Anspruch 36, das ferner eine Datenbank aufweist, die Filterparameterinformation zur Verwendung durch die mehreren Verarbeitungsblöcke umfasst.

**40.** System nach Anspruch 39, worin die Filterparameterinformation mit bestimmten von den Verarbeitungsblöcken identifizierbaren Strukturen verknüpft ist.

**41.** System nach Anspruch 39, worin die Filterparameterinformation mit bestimmten Betriebsarten des Systems verknüpft ist.

**42.** System nach Anspruch 39, worin die Filterparameterinformation mit bestimmten Prozeduren verknüpft ist, die bei Verwendung des Systems ausgeführt werden.

**43.** System nach Anspruch 36, worin das Filtern ein adaptives Filtern umfasst.

**44.** System nach Anspruch 43, worin das adaptive Filtern eine Adaption von einem oder mehreren Filterparametern als Funktion eines räumlichen Aspekts einer zugehörigen der Strukturen umfasst.

**45.** System nach Anspruch 43, worin das adaptive Filtern eine Adaption von einem oder mehreren Filterparametern als Funktion eines zeitlichen Aspekts einer zugehörigen der Strukturen umfasst.

**46.** System nach Anspruch 36, worin das Filtern ein gesteuertes Filtern umfasst.

**47.** System nach Anspruch 46, worin das gesteuerte Filtern ein Steuern des Filters als Funktion einer Ausrichtung einer zugehörigen der Strukturen umfasst.

## Revendications

**1.** Procédé de traitement d’une image, ledit procédé comprenant:

décomposer ladite image en une pluralité de sous-images;
identifier une ou plusieurs structures dans chaque sous-image de ladite pluralité de sous-images; et

appliquer des filtres adaptatifs séparément à chaque sous-image de ladite pluralité de sous-images, où lesdits filtres adaptatifs s'adaptent à un aspect d'une structure associée d'une ou de plusieurs structures précitées; **caractérisé en ce que** ledit procédé comprend la détermination d'un gradient d'une ou de plusieurs structures précitées, ledit gradient ayant une direction de gradient le long de laquelle ledit gradient est le plus grand, et une direction de bord perpendiculaire à ladite direction de gradient, où l'application d'un filtre adaptatif comprend l'application d'un plus grand lissage le long de ladite direction de bord que ladite direction de gradient de ladite structure associée en utilisant un filtre défini par

$$G(u,v) = e^{-\left(\frac{u^2}{\sigma_u^2}+\frac{v^2}{\sigma_v^2}\right)} e^{-\left(\frac{|\nabla g_v|^2}{\sigma_g^2(g_v)}\right)},$$

où v est ladite direction de gradient, u est ladite direction de bord, $\sigma_v$ est un étalement du filtre dans ladite direction de gradient, $\sigma_u$ est un étalement du filtre dans ladite direction de bord, $\nabla g_v$ est ledit gradient dans la direction de gradient et $\sigma_g(g_v)$ est un étalement du filtre.

2. Procédé selon la revendication 1, dans lequel ladite pluralité de sous-images comprennent des sous-images de résolutions différentes.

3. Procédé selon la revendication 2, dans lequel les sous-images de ladite pluralité de sous-images sont chacune une moitié de la résolution d'une sous-image de résolution plus élevée suivante.

4. Procédé selon la revendication 2, dans lequel ladite décomposition est accomplie à partir d'une résolution la plus élevée à une résolution la plus basse desdites résolutions différentes.

5. Procédé selon la revendication 1, dans lequel ladite identification d'une ou de plusieurs structures dans chaque sous-image comprend:

   accepter l'information de structure par rapport à une autre sous-image de ladite pluralité de sous-images pour l'utilisation dans l'identification d'une ou de plusieurs structures d'une sous-image particulière.

6. Procédé selon la revendication 5, dans lequel ladite identification d'une ou de plusieurs structures dans chaque sous-image est accomplie d'une résolution la plus basse à une résolution la plus élevée.

7. Procédé selon la revendication 1, dans lequel ladite identification d'une ou de plusieurs structures dans chaque sous-image comprend:

   identifier un bord de structure dans une sous-image.

8. Procédé selon la revendication 1, dans lequel ladite identification d'une ou de plusieurs structures dans chaque sous-image comprend:

   identifier un gradient dans une sous-image.

9. Procédé selon la revendication 1, dans lequel ladite identification d'une ou de plusieurs structures dans chaque sous-image comprend:

   accéder à une information de stockage de base de connaissances se rapportant à des structures d'image associées à un mode de fonctionnement particulier d'un système hôte.

10. Procédé selon la revendication 1, dans lequel ladite identification d'une ou de plusieurs structures dans chaque sous-image comprend:

    accéder à une information de stockage de base de connaissances se rapportant à des structures d'image associées à une procédure particulière exécutée en utilisant un système hôte.

11. Procédé selon la revendication 1, dans lequel une sous-image est définie par une séquence de trames, et ladite étape d'application de filtres adaptatifs comprend:

utiliser des informations inter-trames pour filtrer une structure d'une sous-image.

**12.** Procédé selon la revendication 1, dans lequel une sous-image est définie par une séquence de trames, et ladite étape d'application de filtres adaptatifs comprend:

utiliser des informations intra-trames pour filtrer une structure d'une sous-image.

**13.** Procédé selon la revendication 1, dans lequel lesdits filtres adaptatifs sont adaptatifs en ce qui concerne un aspect spatial d'une structure associée d'une sous-image.

**14.** Procédé selon la revendication 1, dans lequel lesdits filtres adaptatifs sont adaptatifs en ce qui concerne un aspect temporel d'une structure associée d'une sous-image.

**15.** Procédé selon la revendication 1, dans lequel lesdits filtres adaptatifs sont adaptatifs en ce qui concerne un bord d'une structure associée d'une sous-image.

**16.** Procédé selon la revendication 1, dans lequel lesdits filtres adaptatifs sont adaptatifs en ce qui concerne une pente d'une structure associée d'une sous-image.

**17.** Procédé selon la revendication 1, dans lequel lesdits filtres adaptatifs sont adaptatifs en ce qui concerne un gradient d'une structure associée d'une sous-image.

**18.** Procédé selon la revendication 1, comprenant en outre:

déterminer un ou plusieurs paramètres de filtrage utilisés dans ladite application de filtres adaptatifs en tant que fonction d'une ou de plusieurs structures précitées.

**19.** Procédé selon la revendication 18, dans lequel ladite détermination d'un ou de plusieurs paramètres de filtrage précités comprend:

accéder à une information de stockage de base de connaissances en ce qui concerne ladite structure.

**20.** Procédé selon la revendication 1, comprenant en outre:

déterminer une orientation d'au moins une desdites une ou plusieurs structures précitées.

**21.** Procédé selon la revendication 20, dans lequel ladite application de filtres adaptatifs comprend:

diriger un filtre adaptatif desdits filtres adaptatifs en tant que fonction de ladite orientation de ladite au moins une structure.

**22.** Procédé selon la revendication 20, dans lequel ladite orientation comprend une orientation spatiale.

**23.** Procédé selon la revendication 20, dans lequel ladite orientation comprend une orientation temporelle.

**24.** Procédé selon la revendication 1, comprenant en outre:

reconstruire une image filtrée de ladite pluralité de sous-images après avoir appliqué des filtres adaptatifs séparément à chaque sous-image précitée.

**25.** Procédé selon la revendication 24, dans lequel ladite décomposition de ladite image, ladite application de filtres adaptatifs et ladite reconstruction de ladite image filtrée sont exécutés plusieurs fois.

**26.** Procédé selon la revendication 25, dans lequel quelques-unes de ladite pluralité de fois sont exécutées à la suite d'une modification ou application d'un changement à l'image.

**27.** Procédé selon la revendication 1, comprenant en outre:

déterminer un ou plusieurs paramètres de filtres adaptatifs en tant que fonction d'une ou de plusieurs structures précitées identifiées dans chaque sous-image;
appliquer des filtres adaptatifs pour la mise en oeuvre d'un ou de plusieurs desdits paramètres de filtres adaptatifs; et
reconstruire une image filtrée à partir de ladite pluralité de sous-images après avoir appliqué des filtres adaptatifs séparément à chaque sous-image précitée.

**28.** Procédé selon la revendication 27, dans lequel lesdites sous-images comprennent des sous-images de résolutions différentes, chaque résolution différente précitée étant une moitié d'une résolution suivante plus élevée.

**29.** Procédé selon la revendication 27, dans lequel ladite décomposition de ladite image est accomplie d'une résolution la plus élevée à une résolution la plus basse, et où ladite reconstruction de ladite image filtrée est accomplie d'une résolution la plus basse à une résolution la plus élevée.

**30.** Procédé selon la revendication 27, dans lequel ladite identification d'une ou de plusieurs structures dans chaque sous-image précitée comprend:

identifier une première d'une ou de plusieurs structures dans une sous-image de résolution la plus basse;
fournir des informations en ce qui concerne une ou plusieurs structures précitées à un processus d'identification d'une ou de plusieurs structures dans une sous-image d'une résolution plus élevée; et
identifier une deuxième d'une ou de plusieurs structures dans ladite sous-image d'une résolution plus élevée en utilisant ladite information en ce qui concerne ladite première d'une ou de plusieurs structures.

**31.** Procédé selon la revendication 27, dans lequel ladite détermination d'un ou de plusieurs paramètres de filtres adaptatifs précités comprend:

accéder à une information de stockage de base de connaissances en ce qui concerne ladite structure.

**32.** Procédé selon la revendication 27, dans lequel lesdits filtres adaptatifs sont adaptatifs en ce qui concerne un aspect spatial d'une structure associée d'une sous-image.

**33.** Procédé selon la revendication 27, dans lequel lesdits filtres adaptatifs sont adaptatifs en ce qui concerne un aspect temporel d'une structure associée d'une sous-image.

**34.** Procédé selon la revendication 27, comprenant en outre:

déterminer une orientation d'au moins une desdites une ou plusieurs structures.

**35.** Procédé selon la revendication 34, dans lequel ladite application de filtres adaptatifs comprend:

diriger un filtre adaptatif desdits filtres adaptatifs en tant que fonction de ladite orientation de ladite au moins une structure.

**36.** Système pour le traitement d'une image, ledit système comprenant:

un agent de décomposition d'image multi-résolution apte à recevoir des données d'image et à produire une pluralité de sous-images à partir de celles-ci, chacune desdites sous-images étant d'une résolution différente;
une pluralité de blocs de traitement chacun actionnable pour identifier une ou plusieurs structures dans une sous-image associée de ladite pluralité de sous-images et à réaliser le filtrage de ladite sous-image associée en tant que fonction d'une ou de plusieurs structures précitées, où un ou plusieurs desdits blocs de traitement reçoivent des informations concernant les structures identifiées relativement à une autre sous-image par un autre bloc de traitement de ladite pluralité de blocs de traitement; et
un agent de reconstruction d'images apte à recevoir des sorties de ladite pluralité de blocs de traitement et à produire une image combinée à partir de celles-ci;
**caractérisé en ce que** ledit système est actionnable pour déterminer un gradient d'une parmi une ou plusieurs structures précitées, ledit gradient ayant une direction de gradient le long de laquelle ledit gradient est le plus grand et une direction de bord perpendiculaire à ladite direction de gradient, où ledit filtrage comprend l'application d'un plus grand lissage le long de ladite direction de bord que ladite direction de gradient de ladite structure en utilisant un filtre défini par

$$G(u,v) = e^{-\left(\frac{u^2}{\sigma_u^2}+\frac{v^2}{\sigma_v^2}\right)} e^{-\left(\frac{|\nabla g_v|^2}{\sigma_g^2(g_v)}\right)},$$

où v est ladite direction de gradient, u est ladite direction de bord, $\sigma_v$ est un étalement du filtre dans ladite direction de gradient, $\sigma_u$ est un étalement du filtre dans ladite direction de bord, $\nabla g_v$ est ledit gradient dans ladite direction de gradient et $\sigma_g(g_v)$ est un étalement du filtre.

**37.** Système selon la revendication 36, dans lequel ladite pluralité de blocs de traitement sont réalisés par un processeur de signaux numériques.

**38.** Système selon la revendication 37, dans lequel ledit agent de décomposition d'image multi-résolution et ledit agent de reconstruction d'image sont réalisés par ledit processeur de signaux numériques.

**39.** Système selon la revendication 36, comprenant en outre:

une base de données stockant des informations de paramètres de filtrage pour utilisation par ladite pluralité de blocs de traitement.

**40.** Système selon la revendication 39, dans lequel lesdites informations de paramètres de filtrage sont associées à des structures particulières comme étant identifiables par lesdits blocs de traitement.

**41.** Système selon la revendication 39, dans lequel lesdites informations de paramètres de filtrage sont associées à des modes de fonctionnement particuliers dudit système.

**42.** Système selon la revendication 39, dans lequel lesdites informations de paramètres de filtrage sont associées à des procédures particulières exécutées en utilisant ledit système.

**43.** Système selon la revendication 36, dans lequel ledit filtrage comprend un filtrage adaptatif.

**44.** Système selon la revendication 43, dans lequel ledit filtrage adaptatif comprend l'adaptation d'un ou de plusieurs paramètres de filtre en tant que fonction d'un aspect spatial d'une structure associée desdites structures.

**45.** Système selon la revendication 43, dans lequel ledit filtrage adaptatif comprend l'adaptation d'un ou de plusieurs paramètres de filtre en tant que fonction d'un aspect temporel d'une structure associée desdites structures.

**46.** Système selon la revendication 36, dans lequel ledit filtrage comprend un filtrage dirigé.

**47.** Système selon la revendication 46, dans lequel ledit filtrage dirigé comprend la direction dudit filtre en tant que fonction d'une orientation d'une structure associée desdites structures.

100
111
112
113
114
121
122
123
124
125
126
127

FIG. 1

t
209
204
203
202
201
X AXIS
Y AXIS
t
209
204
203
202
201
X AXIS
Y AXIS
214
213
212
211
t
302
301
X
Y
Z

FIG. 2A

FIG. 2B

FIG. 3

FIG. 4A
SIGNAL
401
NOISE
402
NOISY SIGNAL
403

*FIG. 4B*

403
NOISY SIGNAL
410
ADAPTIVE FILTER
404
FILTERED SIGNAL

510
504
403
510
510
510
521
522
510
510
510
510

FIG. 5
(Prior Art)

404
403
611
611
611
612
613
614
615
611
611

FIG. 6

711
703
712

FIG. 7A

FIG. 7B

811
803
812
804

FIG. 8A

FIG. 8B

903
912
911
904

FIG. 9A

FIG. 9B

0
30
60
90
120
150
0
45
90
135

*FIG. 10A*

*FIG. 10B*

x
u
θ
y
v
$\sigma_u$
$\sigma_y$

FIG. 11

*FIG. 12*

GRADIENT DIRECTION
EDGE DIRECTION

*FIG. 13A*

[1] [1 1] [1 2 1] [1 3 3 1] [1 4 6 4 1]

[1]
[1 1; 1 1]
[1 2 1; 2 4 2; 1 2 1]
[1 3 3 1; 3 9 9 3; 3 9 9 3; 1 3 3 1]
[1 4 6 4 1; 4 16 24 16 4; 6 24 36 24 6; 4 16 24 16 4; 1 4 6 4 1]

*FIG. 13B*

[1]
[a b; b a] [b a; a b]
[d e b; e a e; b e d] [b e c; e a e; c e b] [f g f; b a b; f g f] [f b f; g a g; f b f]

*FIG. 13C*

FIG. 14

SCANHEAD
1401
FRONT-END
1402
SIGNAL PROCESSOR
1403
BACK-END
1405
EXTERNAL DSP
1404
1414
DISPLAY
1406
1400

*FIG. 15*

PROCESSING PRARAMETERS
KNOWLEDGE BASE
1414
INPUT IMAGE DATA
PRE PROCESS
1500
MULTI-RESOLUTION DECOMPOSITION
1501
$H_0$
$H_1$
$H_{N-2}$
$L_{N-1}$
PROCESS
1502d
PROCESS
1502c
PROCESS
1502b
PROCESS
1502a
$P_0$
$P_1$
$P_{N-2}$
$P_{N-1}$
MULTI-RESOLUTION RECONSTRUCTION
1503
POST PROCESS
1504
PROCESSED IMAGE DATA

INPUT IMAGE DATA
DECIMATION FILTER
INTERPOLATION FILTER
1600
1601
1602
1603
2
+
-
H0
HN-2
LN-1
1501


FIG. 16

INPUT
FEATURES FROM LOWER RESOLUTION
ADDAPTIVE SPATIO-TEMPORAL FILTER
1702
COMPUTE FILTER COEFFICIENTS
1703
EXTRACT LOCAL FEATURES
1701
UPSAMPLE
1704
OUTPUT
KNOWLEDGE BASE
FEATURES FOR HIGHER RESOLUTION PROCESSING
1502

*FIG. 17*

*FIG. 18*

COMBINER
UPSAMPLE
REMAP
COMBINER
1803
1802
UPSAMPLE
1801
REMAP
1503
$P_0$
$P_{N-2}$
$P_{N-1}$

1404
I/O PORT
1904
DMA ENGINE
1903
HIGH SPEED MEMORY
1902
DSP CORE
1901
FRAME BUFFER
1905

FIG. 19

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5722314 A


### Non-patent literature cited in the description


- Speckle Removal From SAR Images in the Undecimated Wavelet Domain. *IEEE Transactions on Geoscience and Remote Sensing,* November 2002, vol. 40 (11
- A nonlinear multi-resolution gradient adaptive filter for medical images. *Proceedings of SPIE,* 2003, vol. 5032